(19) **Europäisches Patentamt / European Patent Office / Office européen des brevets**

(11) **EP 3 825 717 B1**

(12) **EUROPEAN PATENT SPECIFICATION**

(45) Date of publication and mention
of the grant of the patent:
**17.12.2025 Bulletin 2025/51**

(21) Application number: **19838549.4**

(22) Date of filing: **01.07.2019**

(51) International Patent Classification (IPC):
**G01S 7/35** (2006.01)     **G01S 7/40** (2006.01)
**G01S 13/00** (2006.01)    **G01S 13/34** (2006.01)
**G01S 13/42** (2006.01)    **G01S 13/44** (2006.01)
**G01S 13/931** (2020.01)   **G01S 13/02** (2006.01)

(52) Cooperative Patent Classification (CPC):
**G01S 13/343; G01S 7/356; G01S 7/4008;
G01S 7/4026; G01S 13/003; G01S 13/345;
G01S 13/426; G01S 13/4454; G01S 13/931;**
G01S 2013/0254; G01S 2013/93271

(86) International application number:
**PCT/JP2019/026068**

(87) International publication number:
**WO 2020/017290 (23.01.2020 Gazette 2020/04)**

(54) **ELECTRONIC DEVICE, ELECTRONIC DEVICE CONTROL METHOD, AND ELECTRONIC DEVICE CONTROL PROGRAM**

ELEKTRONISCHE VORRICHTUNG, STEUERUNGSVERFAHREN FÜR EINE ELEKTRONISCHE VORRICHTUNG UND STEUERUNGSPROGRAMM FÜR EINE ELEKTRONISCHE VORRICHTUNG

DISPOSITIF ÉLECTRONIQUE, PROCÉDÉ DE COMMANDE DE DISPOSITIF ÉLECTRONIQUE ET PROGRAMME DE COMMANDE DE DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2018    JP 2018137184
25.09.2018    JP 2018179122**

(43) Date of publication of application:
**26.05.2021 Bulletin 2021/21**

(73) Proprietor: **Kyocera Corporation
Kyoto-shi, Kyoto 612-8501 (JP)**

(72) Inventors:
• **NISHIKIDO, Masamitsu
Kyoto-shi, Kyoto 612-8501 (JP)**

• **MURAKAMI, Youhei
Kyoto-shi, Kyoto 612-8501 (JP)**
• **SAHARA, Tooru
Kyoto-shi, Kyoto 612-8501 (JP)**

(74) Representative: **Viering, Jentschura & Partner mbB
Patent- und Rechtsanwälte
Am Brauhaus 8
01099 Dresden (DE)**

(56) References cited:
**JP-A- 2001 094 345     JP-A- 2002 076 743
JP-A- 2010 243 237     JP-A- 2010 243 237
JP-A- 2017 143 356     JP-A- 2017 143 356
JP-A- H06 242 229      JP-A- H11 340 723
US-A- 4 749 995**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATION

The present application claims priority to and the benefit of Japanese Patent Application Nos. 2018-137184 filed on July 20, 2018 and 2018-179122 filed on September 25, 2018.

TECHNICAL FIELD

The present disclosure relates to an electronic device, a control method of the electronic device and a control program of the electronic device.

BACKGROUND

In a field such as an industry related to automobiles, for example, technology for measuring a distance between an own vehicle and an object is regarded as important. In particular, in recent years, various studies have been conducted on a radar (RADAR: Radio Detecting and Ranging) technology for measuring a distance to an object by transmitting radio waves such as millimeter-waves and receiving reflection waves reflected from an object such as an obstacle. It is expected that the importance of such technology for measuring a distance will increase in the future with the development of the technology for assisting the driver's driving and the technology related to autonomous driving that automates a part or all of the driving. As such a technology, for example, Patent Literature 1 (PL1) discloses formation of a multi-beam over the multiple operating frequency bands using a phase array antenna.

CITATION LIST

Patent Literature

PTL 1: JP2015-005994 (A)

Moreover, JP 2010 243237 A discloses a target detection method, wherein delay time differences due to intervals among a plurality of antennas are compensated and JP 2017 143356 A discloses an antenna device including set value switching registers for outputting a phase shift amount set value to phase shifters connected electrically with element antennas.

SUMMARY

(Solution to Problem)

The present invention provides an electronic device according to claim 1, a control method according to claim 13, and a control program according to claim 14.

BRIEF DESCRIPTION OF THE DRAWINGS

In the accompanying drawings:

FIG. 1 is a diagram illustrating a transmission wave of an electronic device according to an embodiment;
FIG. 2 is a functional block diagram schematically illustrating a configuration of the electronic device according to an embodiment;
FIG. 3 is a diagram illustrating an example of the transmission wave transmitted by the electronic device according to an embodiment;
FIG. 4 is a diagram illustrating another example of a transmission wave transmitted by the electronic device according to an embodiment;
FIG. 5 is a diagram illustrating still another example of a transmission wave transmitted by the electronic device according to an embodiment;
FIG. 6 is a diagram illustrating yet another example of a transmission wave transmitted by the electronic device according to an embodiment;
FIG. 7 is a diagram illustrating a transmission wave transmitted by the electronic device according to an embodiment;
FIG. 8 is a flowchart illustrating operation of the electronic device according to an embodiment;
FIG. 9 is a functional block diagram schematically illustrating a configuration of an electronic device according to another embodiment; and

FIG. 10 is a flowchart illustrating operation of the electronic device according to another embodiment.

DETAILED DESCRIPTION

Conventionally, in a technical field such as wireless communication, a technique for forming a beam of transmission waves transmitted from a plurality of transmitting antennas (beamforming) is known. With beamforming, a reachable distance of radio wave can be extended, for example, by forming a beam of transmission waves transmitted from a plurality of transmitting antennas into a predetermined direction. When a beam of transmission waves transmitted from a plurality of transmitting antennas is formed, if the beam can be precisely directed in a predetermined direction, it will contribute to improvement of accuracy of measuring a distance to a surrounding object. It is therefore an object of the present disclosure to provide an electronic device that contributes to improvement of accuracy of measuring an object, a control method of the electronic device and a control program of the electronic device. According to an embodiment, an electronic device that contributes to improvement of accuracy of measuring an object, a control method of the electronic device and a control program of the electronic device can be provided. An embodiment will be described in detail below with reference to drawings.

An electronic device according to an embodiment measures a distance between an object existing around a sensor and the sensor by a sensor mounted on a vehicle such as an automobile, for example. The sensor may transmit, as detection waves, transmission waves such as radio waves from a transmitting antenna. Further, the sensor may receive reflection waves of the transmission waves reflected by an object by a receiving antenna. The sensor may include at least one of the transmitting antenna and the receiving antenna. The electronic device according to an embodiment may measure a distance between a sensor and an object based on transmission waves transmitted by the transmitting antenna and reflection waves received by the receiving antenna.

A configuration in which an electronic device according to an embodiment is mounted on an automobile such as a passenger car will be described below, as a typical example. However, an object on which the electronic device according to an embodiment is mounted is not limited to automobiles and the like. The electronic device according to an embodiment may be mounted on various moving bodies such as a self-driving car, a bus, a truck, a motorcycle, a bicycle, a ship, an aircraft, an agricultural vehicle such as a tractor, a fire engine, an ambulance, a police vehicle, a snow removal vehicle, a road cleaning vehicle, a drone and a pedestrian. Further, an object on which the electronic device according to an embodiment is mounted is not necessarily limited to a moving body that moves by itself. The electronic device according to an embodiment can measure a distance between a sensor and an object in a situation where at least one of the sensor and the object can move. Further, the electronic device according to an embodiment can measure a distance between a sensor and an object even if both the sensor and the object are stationary.

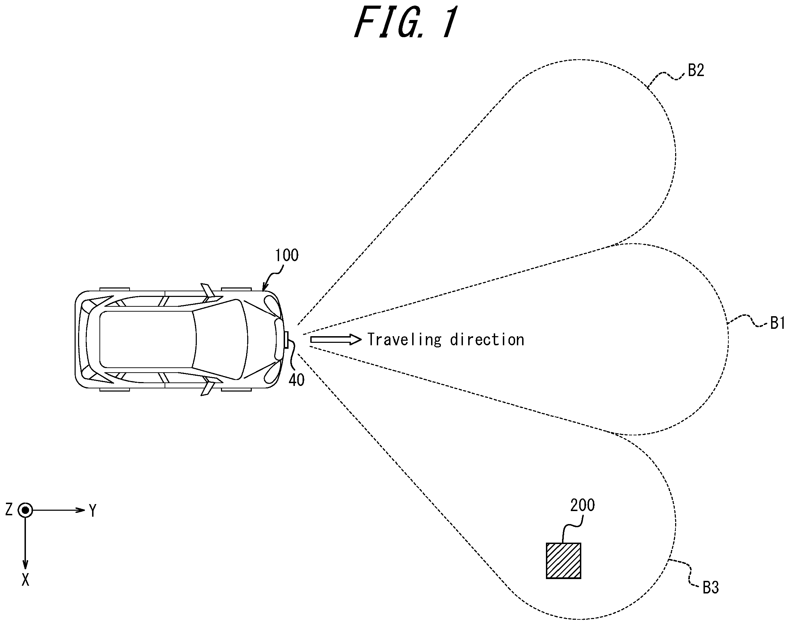

FIG. 1 illustrates a usage aspect of the electronic device according to an embodiment. FIG. 1 illustrates an example in which a sensor 40 including a transmitting antenna according to an embodiment is mounted on a moving body.

The sensor 40 is mounted on a moving body 100 illustrated in FIG. 1. Further, it is assumed that the moving body 100 illustrated in FIG. 1 is equipped with (for example, incorporates) the electronic device according to an embodiment. The moving body 100 illustrated in FIG. 1 may be an automobile vehicle such as a passenger car, but may also be any type of moving body. In FIG. 1, the moving body 100 may move (travel or move slowly) in the Y-axis positive direction (traveling direction) illustrated in FIG. 1, may move in another direction, or may be stationary without moving.

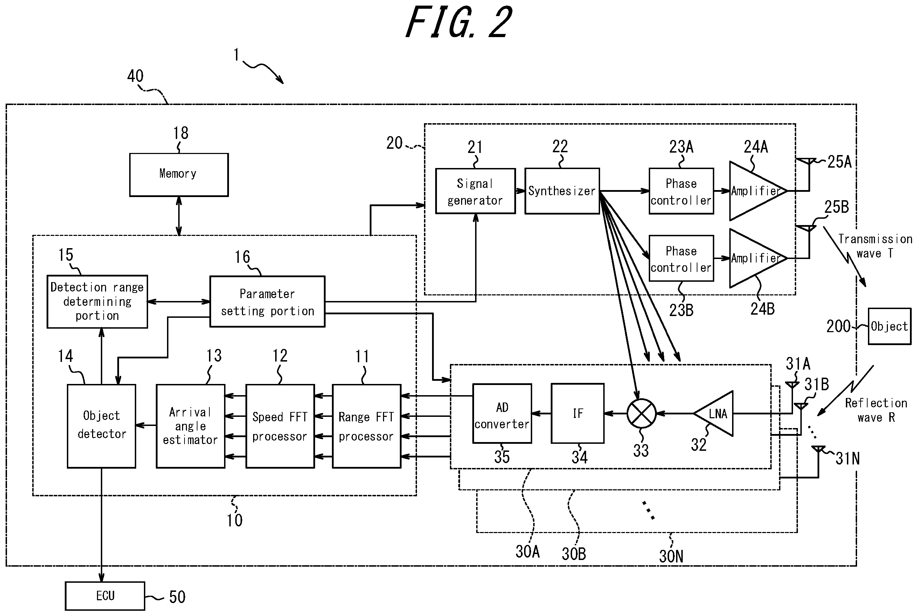

As illustrated in FIG. 1, the sensor 40 is mounted on the moving body 100. Further, FIG. 2 illustrates an electronic device 1 having the sensor 40 and an ECU 50. In the example illustrated in FIG. 1, only one sensor 40 is mounted on the front of the moving body 100. Here, the position where the sensor 40 is mounted on the moving body 100 is not limited to the position illustrated in FIG. 1, and may be mounted appropriately on other positions. For example, the sensor 40 as illustrated in FIG. 1 may be mounted on the left side, the right side, and/or the rear side of the moving body 100. Further, the number of such a sensor may be any number greater than one according to various conditions (or requirements) such as measurement range and/or accuracy of the moving body 100. Further, the sensor 40 may be mounted inside or outside of the moving body 100. The inside of the moving body 100 may be, for example, the inside of the body, the inside of the bumper, the inside of the headlight or the space in the vehicle or any combination thereof.

The sensor 40 transmits radio waves as transmission waves. For example, when a predetermined object exists around the moving body 100, at least a part of the transmission waves transmitted from the sensor 40 are reflected from the object and will be reflection waves. Then, the electronic device 1 mounted on the moving body 100 receives such reflection waves and thus can detect the object.

The electronic device 1 mounted on the moving body 100 illustrated in FIG. 1 transmits transmission waves from the transmitting antenna mounted on the sensor 40 and thus can detect an object existing within a predetermined distance in front of the moving body 100, for example. In this manner, the electronic device 1 can detect a predetermined object existing around the moving body 100. Specifically, the electronic device 1 can detect a presence of a predetermined object around the moving body 100. Further, the electronic device 1 can measure the distance between the moving body 100, which is an own vehicle, and a predetermined object. Moreover, the electronic device 1 can also measure the azimuth from the moving body 100, which is an own vehicle, to a predetermined object. Further, the electronic device 1 can estimate the relative velocity between the moving body 100, which is an own vehicle, and a predetermined object.

Here, a predetermined object may be at least one of an oncoming vehicle traveling in a lane adjacent to the moving body 100, a vehicle traveling in parallel with the moving body 100, and a vehicle traveling in front of or behind the moving body 100 in the same lane, for example. Further, a predetermined object may be any object existing around the moving body 100, such as a motorcycle, a bicycle, a stroller, a pedestrian, a guardrail, a median strip, a road sign, a step on a sidewalk, a wall, a manhole, or an obstacle. In the present disclosure, objects detected by the sensor 40 include not only inanimate objects but also organisms such as humans and animals. Objects detected by the sensor of the present disclosure include targets including people, objects, animals, etc., which are detected by radar technology.

Further, FIG. 1 schematically illustrates a state where transmission waves transmitted from a transmitting antenna mounted on the moving body 100 form radio wave beams. As described below, the transmitting antenna is composed of a plurality of transmitting antennas. The sensor 40 including the transmitting antennas may typically a radar (RADAR: Radio Detecting and Ranging) sensor configured to transmit and receive radio waves. However, the sensor 40 is not limited to a radar sensor. The sensor 40 according to an embodiment may be a sensor based on LIDAR (Light Detection and Ranging, Laser Imaging Detection and Ranging) technology by light waves, for example. Such sensors can be configured by including, for example, a patch antenna, for example. Since technologies such as RADAR and LIDAR have already been known, detailed description may be simplified or omitted as appropriate.

As illustrated in FIG. 1, the sensor 40 mounted on the front of the moving body 100 can form a beam B1 of transmission waves in front of the moving body 100, for example (beamforming). At this time, the electronic device 1 controls a phase of each transmission wave so that the phases of respective transmission waves transmitted from the transmitting antenna (a plurality of transmitting antennas) are aligned in the forward direction (Y-axis positive direction) of the moving body 100. In this manner, a plurality of transmission waves strengthen each other in the forward direction (Y-axis positive direction) of the moving body 100 and form the beam B1 of radio waves. As described above, by adopting the beamforming technology, accuracy of measuring a distance to a predetermined object detected by transmission waves can be improved. In addition, with beamforming, a reachable range of transmission waves can be extended.

Further, the electronic device 1 can change the direction of the beam of transmission waves by appropriately controlling the phase of the transmission waves transmitted from the transmitting antenna (a plurality of antennas). For example, the electronic device 1 can also control a phase of each transmission wave so that the phases of respective transmission waves transmitted from the transmitting antennas are aligned in the front left direction (the left side in the Y-axis positive direction) of the moving body 100. In this manner, a plurality of transmission waves strengthen each other in the front left direction (the left side in the Y-axis positive direction) of the moving body 100 and form a beam B2 of radio waves. Further, the electronic device 1 can also control a phase of each transmission wave so that the phases of respective transmission waves transmitted from the transmitting antennas are aligned in the front right direction (the right side in the Y-axis positive direction) of the moving body 100. In this manner, a plurality of transmission waves strengthen each other in the front right direction (the right side in the Y-axis positive direction) of the moving body 100 and form a beam B3 of radio waves The electronic device 1 can direct the beam of transmission waves transmitted from the transmitting antennas in various directions, other than the beams B1-B3 illustrated in FIG. 1, by appropriately changing the phase of transmission wave. It is to be noted that, in the present disclosure, the phase is a variable representing a position of the cycle of electromagnetic wave, and may be, for example, a quantity corresponding to an angle when the electromagnetic wave is represented by a sine function.

As illustrated in FIG. 1, when an object 200 exists around the moving body 100, for example, the electronic device 1 can control so that the transmission waves transmitted from the transmitting antennas form the beam B3. In this manner, the electronic device 1 can measure the angle (e.g., azimuth) from the transmitting antenna to the object 200 by controlling the beam direction of the transmission waves. With beamforming, the accuracy of measuring an angle toward a predetermined object can be improved by controlling the radiating direction of the transmission waves.

In FIG. 1, the size of the sensor 40 is not necessarily indicated by the actual ratio with respect to the size of the moving body 100. FIG. 1 illustrates a state where the sensor 40 is mounted outside the moving body 100. However, in an embodiment, the sensor 40 may be mounted on various positions of the moving body 100. For example, in an embodiment, the sensor 40 may be mounted inside the moving body 100, for example, inside the bumper, so as not be seen from outside. Further, FIG. 1 schematically illustrates beams B1-B3 formed by the transmission waves transmitted from the sensor 40. Further, the position of the moving body 100 on which the sensor 40 is mounted may be either outside or inside of the moving body 100 or both. The inside of the moving body 100 may include, for example, inside the body of the moving body 100, inside the bumper, in the headlight or the interior space. The outside of the moving body 100 includes, for example, the surface of the body of the moving body 100, the surface of a bumper, the surface of a headlight, and the like.

As a typical example, the sensor 40 will be described below assuming that it transmits radio waves in a frequency band of millimeter-waves (30 GHz or higher) or quasi-millimeter-waves (e.g., around 20 GHz-30 GHz). In the present disclosure, for example, as the millimeter-wave, a so-called 79 GHz band (77 GHz or higher, 81 GHz or lower) millimeter-wave can be used. The electronic device 1 can calculate the distance between the moving body 100 on which the sensor 40 is mounted and a predetermined object existing around the moving body 100 by transmitting and receiving millimeter-waves. Further, the electronic device 1 can also calculate the position of a predetermined object existing around the moving body 100 on which the sensor 40 is mounted by transmitting and receiving millimeter-waves. Further, the electronic device 1 can also calculate the angle toward a predetermined object existing around the moving body 100 on which the sensor 40 is mounted by transmitting and receiving millimeter-waves. Moreover, the electronic device 1 can also calculate the relative velocity between the moving body 100 on which the sensor 40 is mounted and a predetermined object existing around the moving body 100 by transmitting and receiving millimeter-waves. It is to be noted that, in the present disclosure, the descriptions of A GHz-B GHz and A-B GHz with A and B as any numbers mean A GHz or more and less than B GHz. In the present disclosure, for example, millimeter-waves of 81 GHz or higher may be used as millimeter-waves.

FIG. 2 is a functional block diagram schematically illustrating a configuration of the electronic device according to an embodiment. A configuration of the electronic device according to an embodiment will be described below.

When measuring a distance or the like with a millimeter-wave radar, a frequency-modulated continuous wave radar (hereinafter referred to as FMCW radar) is often used. The FMCW radar sweeps the frequency of radio wave to be transmitted to generate a transmission signal. Therefore, in a millimeter-wave FMCW radar that uses radio wave in the frequency band of 79 GHz, for example, the frequency of the radio wave used has a frequency bandwidth 4 GHz such as 77 GHz-81 GHz, for example. The radar in the frequency band 79 GHz is characterized by a usable frequency bandwidth wider than other millimeter-wave/quasi-millimeter-wave radars such as the frequency bands 24 GHz, 60 GHz, and 76 GHz. Such an embodiment will be described below.

As illustrated in FIG. 2, the electronic device 1 according to an embodiment is composed of the sensor 40 and an ECU (Electronic Control Unit) 50. It is to be noted that the electronic device 1 according to the present disclosure may not include the ECU 50 and may have the sensor 40. The ECU 50 controls various operations of the moving body 100. The ECU 50 may be composed of at least one or more ECUs. The electronic device 1 according to an embodiment includes a controller 10. Further, the electronic device 1 according to an embodiment may include, as appropriate, other function parts, such as at least one of a transmitter 20 and receivers 30A to 30N (N is an arbitrary natural number (the same applies hereinafter)). As illustrated in FIG. 2, the electronic device 1 may include a plurality of receivers such as receivers 30A to 30N. Hereinafter, when the receiver 30A, the receiver 30B and the receiver 30N are not distinguished from each other, they are simply referred to as "receiver 30."

The controller 10 may include a range FFT processor 11, a speed FFT processor 12, an arrival angle estimator 13, an object detector 14, a detection range determining portion 15 and a parameter setting portion 16. These function parts included in the controller 10 will be further described in detail below. Further, as illustrated in FIG. 2, in an embodiment, the controller 10 may be connected to a memory 18.

As illustrated in FIG. 2, the transmitter 20 may include a signal generator 21, a synthesizer 22, phase controllers 23A and 23B, amplifiers 24A and 24B and transmitting antennas 25A and 25B. Hereinafter, when the phase controller 23A and the phase controller 23B are not distinguished from each other, they are simply referred to as "phase controller 23." Further, when the amplifier 24A and the amplifier 24B are not distinguished from each other, they are simply referred to as "amplifier 24." Moreover, when the transmitting antenna 25A and the transmitting antenna 25B are not distinguished from each other, they are simply referred to as "transmitting antenna 25."

As illustrated in FIG. 2, the receivers 30 may include respective corresponding receiving antennas 31A, 31B-31N. Hereinafter, when the receiving antenna 31A, the receiving antenna 31B and the receiving antenna 31N are not distinguished from each other, they are simply referred to as "receiving antenna 31." Further, as illustrated in FIG. 2, each of the receivers 30 may include an LNA 32, a mixer 33, an IF 34 and an AD converter 35. Each of the receivers 30A, 31B-30N may have the same configuration. FIG. 2 schematically illustrates, as a representative example, a configuration of only the receiver 30A.

The above described sensor 40 may include the transmitting antenna 25 and the receiving antenna 31, for example. Further, the sensor 40 may appropriately include at least one of other function parts such as the controller 10.

The controller 10 included in the electronic device 1 of an embodiment can control operation of the entire electronic device 1 including control of each function part constituting the electronic device 1. The controller 10 may include at least one processor, such as a central processing unit (CPU) to provide control to execute various functions and processing power. The controller 10 may be realized collectively by one processor, by some processors, or by each individual processor. The processor may be realized as a single integrated circuit. The processor may be realized as a plurality of communicably connected integrated circuits and discrete circuits. The processor may be realized on the basis of various other known techniques. In an embodiment, the controller 10 may be configured as, for example, a CPU and a program executed by the CPU. The controller 10 may appropriately include a memory necessary for operating the controller 10. In FIG. 2, in addition to the controller 10, one or more controllers that control the operation of the electronic device 1 may be included.

The memory 18 may store programs executed by the controller 10 and the results of processing executed by the controller 10. Further, the memory 18 may function as a working memory for the controller 10. The memory 18 can be configured as a semiconductor memory, a magnetic memory, or the like, but is not limited thereto, and may be any storage device. Further, for example, the memory 18 may be a storage medium such as a memory card inserted in the electronic device 1 according to the present embodiment. In addition, as described above, the memory 18 may be an internal memory of the CPU used as the controller 10.

In an embodiment, the memory 18 may store various parameters for setting a range for detecting an object by transmission waves T transmitted from the transmitting antennas 25 and reflection waves R received by the receiving antennas 31. Such parameters will be further described below.

In the electronic device 1 of an embodiment, the controller 10 can control at least one of the transmitter 20 and the receiver 30. In this case, the controller 10 may control at least one of the transmitter 20 and the receiver 30 on the basis of various kinds of information stored in the memory 18. Further, in the electronic device 1 according to an embodiment, the controller 10 may instruct the signal generator 21 to generate a signal, or may control the signal generator 21 to generate a signal.

The signal generator 21 generates a signal (transmission signal) transmitted as a transmission wave T from the transmitting antenna 25 under the control of the controller 10. When generating a transmission signal, the signal generator 21 may assign the frequency of the transmission signal, for example, on the basis of control by the controller 10. Specifically, the signal generator 21 may assign the frequency of the transmission signal according to the parameters set by the parameter setting portion 16. For example, the signal generator 21 receives frequency information from the controller 10 (the parameter setting portion 16) to generate a signal with a predetermined frequency in a frequency band of 77-81 GHz, for example. The signal generator 21 may be configured by including a function part such as a voltage-controlled oscillator (VOC), for example.

The signal generator 21 may be configured as hardware having the above described function, for example, as a microcomputer or the like, or as a processor such as a CPU and a program executed by the processor, and the like. Each function part described below may also be configured as hardware having the function, and if possible, may be configured by, for example, a microcomputer, or may be configured by a processor such as a CPU and a program executed by the processor.

In the electronic device 1 according to an embodiment, the signal generator 21 may generate transmission signals (transmission chirp signals) such as chirp signals, for example. In particular, the signal generator 21 may generate signals whose frequency changes periodically and linearly (linear chirp signals). For example, the signal generator 21 may generate chirp signals whose frequency increases periodically and linearly from 77 GHz to 81 GHz over time. Further, for example, the signal generator 21 may generate signals in which the frequency periodically repeats a linear increase (up chirp) and decrease (down chirp) from 77 GHz to 81 GHz over time. The signals generated by the signal generator 21 may be preset in the controller 10, for example. Further, the signals generated by the signal generator 21 may be stored in advance in the memory 18. for example. Since chirp signals used in the technical field such as radar are known, more detailed description will be simplified or omitted as appropriate. The signals generated by the signal generator 21 are supplied to the synthesizer 22. The chirp signals may be discrete. The amplitudes of chirp signals may be different from each other. The cycles of chirp signals may be different from each other. A group of a plurality of chirp signals may be regarded as one frame. Further, a group of a plurality of chirp signals in this frame may be regarded as a sub-frame.

The synthesizer 22 raises the frequency of the signals generated by the signal generator 21 to the frequency in a predetermined frequency band. The synthesizer 22 may raise the frequency of the signals generated by the signal generator 21 to the frequency selected as the frequency of the transmission waves T transmitted from the transmitting antenna 25. The frequency selected as the frequency of the transmission waves T transmitted from the transmitting antenna 25 may be set, for example, by the controller 10. For example, the frequency selected as the frequency of the transmission waves T transmitted from the transmitting antenna 25 may be the frequency selected by the parameter setting portion 16. Further, the frequency selected as the frequency of the transmission waves T transmitted from the transmitting antenna 25 may be stored in the memory 18, for example. The signals whose frequency is increased by the synthesizer 22 are supplied to the phase controller 23 and the mixer 33. When more than one phase controllers 23 are used, the signals whose frequency is increased by the synthesizer 22 may be supplied to each of the phase controllers 23. Further, when more than one receivers 30 are used, the signals whose frequency is increased by the synthesizer 22 may be supplied to each mixer 33 of the receivers 30.

The phase controller 23 controls a phase of transmission signals supplied from the synthesizer 22. Specifically, the phase controller 23 may adjust a phase of the transmitted signals by appropriately advancing or delaying the phase of the signals supplied from the synthesizer 22 on the basis of control by the controller 10, for example. In this case, the phase controller 23 may adjust a phase of each transmission signal on the basis of the path difference of each transmission wave T transmitted from a plurality of transmitting antennas 25. The transmission waves T transmitted from a plurality of transmitting antennas 25 strengthen each other in a predetermined direction to form a beam (beamforming) when the phase controller 23 appropriately adjusts the phase of each transmission signal. In this case, the correlation between the beamforming direction and the phase quantity to be controlled of the transmission signals transmitted by each of the transmitting antennas 25 may be stored in the memory 18, for example. The transmission signals whose phase is controlled by the phase controller 23 are supplied to the amplifier 24. The phase controller 23 controls a phase of at least one of transmission waves transmitted from the transmitting antenna 25 so that the phases of respective transmission waves transmitted from the transmitting antenna 25 are aligned in a predetermined direction. In the present disclosure, "the phases of respective transmission waves transmitted from the transmitting antenna 25 are aligned in a predetermined direction" means that the phases of respective transmission waves transmitted from the transmitting antenna 25 will be the same value, or the phases of respective transmission waves transmitted from the transmitting antenna 25 will be a value shifted by $2N\pi$ [rad] or n $\times$ 360° , where n is any integer.

The amplifier 24 amplifies the power (electrical power) of the transmission signals supplied from the phase controller 23 on the basis of control by the controller 10, for example. When the sensor 40 includes a plurality of transmitting antennas 25, a plurality of amplifiers 24 may amplify the power (electrical power) of the transmission signals supplied from the corresponding one of the phase controllers 23 on the basis of control by the controller 10, for example. Since the technique itself for amplifying the power of the transmission signal is already known, a more detailed description will be omitted. The amplifier 24 is connected to the transmitting antenna 25.

The transmitting antenna 25 outputs (transmits) the transmission signals amplified by the amplifier 24 as transmission waves T. When the sensor 40 includes a plurality of transmitting antennas 25, each of the transmitting antennas 25 may output (transmit) transmission signals amplified by the corresponding amplifier as transmission waves T. Since the transmitting antenna 25 can be configured in the same manner as the transmitting antenna 25 used for known radar technology, a more detailed description will be omitted.

In this manner, the electronic device 1 according to an embodiment includes the transmitting antenna 25, and can transmit transmission signals (e.g., chirp signals), as transmission waves T, from the transmitting antenna 25. Here, at least one of function parts constituting the electronic device 1 may be placed in a housing. Further, in this case, the housing may have a structure that cannot be easily opened. For example, the transmitting antenna 25, the receiving antenna 31 and the amplifier 24 may be placed in a housing, and the housing may have a structure that cannot be easily opened. Moreover, here, when the sensor 40 is mounted on a moving body 100 such as an automobile, the transmitting antenna 25 may transmit transmission waves T to the outside of the moving body 100 via a cover member such as a radar cover. In this case, the radar cover may be made of a substance that allows electromagnetic waves to pass through, such as synthetic resin or rubber. This radar cover may be a housing of the sensor 40, for example. Covering the transmitting antenna 25 with a member such as a radar cover may reduce the risk that the transmitting antenna 25 will be damaged or that malfunction will occur due to contact with the outside. The above described radar cover and housing may also be referred to as a radome.

FIG. 2 illustrates an example where the electronic device 1 includes two transmitting antennas 25. However, in an embodiment, the electronic device 1 may include any number of transmitting antennas 25. Further, in an embodiment, the electronic device 1 may include a plurality of transmitting antennas 25 when the transmission waves T transmitted from the transmitting antennas 25 form a beam in a predetermined direction. In an embodiment, the electronic device 1 may include any multiple number of transmitting antennas 25. In this case, the electronic device 1 may include a plurality of phase controllers 23 and a plurality of amplifiers 24 corresponding to a plurality of transmitting antennas 25. Further, a plurality of phase controllers 23 may control each phase of transmission waves supplied from the synthesizer 22 and transmitted from a plurality of transmitting antennas 25. Further, a plurality of amplifiers 24 may amplify each power of transmission signals transmitted from a plurality of transmitting antennas 25. In this case, the sensor 40 is configured by including a plurality of transmitting antennas 25. In this manner, when the electronic device 1 illustrated in FIG. 2 includes a plurality of transmitting antennas 25, it may also include a plurality of function parts necessary for transmitting transmission waves T from the transmitting antennas 25.

The receiving antenna 31 receives reflection waves R. The reflection waves R are the transmission waves T reflected from a predetermined object 200. The receiving antenna 31 may be composed of a plurality of antennas such as a receiving antenna 31A to a receiving antenna 31N, for example, where N is any integer of 2 or more. The receiving antenna 31 can be configured in the same manner as the receiving antenna used for known radar technology, thus more detailed description will be omitted. The receiving antenna 31 is connected to the LNA 32. The reception signals based on the reflection waves R received by the receiving antenna 31 are supplied to the LNA 32.

The electronic device 1 according to an embodiment can receive reflection waves R, which are transmission waves T transmitted as transmission signals such as chirp signals (transmission chirp signal) from a plurality of receiving antennas 31 and reflected by a predetermined object 200. In this manner, when the transmitted chirp signals are transmitted as transmission waves T, the reception signals based on the received reflection waves R are referred to as reception chirp signals. That is, the electronic device 1 receives, as reflection waves R, reception signals (e.g., reception chirp signals) from the receiving antennas 31. Here, when the sensor 40 is mounted on a moving body 100 such as an automobile, the receiving antenna 31 may receive reflection waves R from outside of the moving body 100 via a cover member such as a radar cover, for example. In this case, the radar cover may be made of a substance, such as synthetic resin or rubber, that allows electromagnetic waves to pass through. This radar cover may be a housing of the sensor 40, for example. Covering the receiving antenna 31 with a member such as a radar cover can reduce the risk that the receiving antenna 31 will be damaged or that malfunction will occur due to contact with the outside. The radar cover and the housing may also be referred to as a radome.

Further, when the receiving antenna 31 is mounted in the vicinity of the transmitting antenna 25, they may be collectively included in one sensor 40. That is, one sensor 40 may include at least one transmitting antenna 25 and at least one receiving antenna 31. For example, one sensor 40 may include a plurality of transmitting antennas 25 and a plurality of receiving antennas 31. In this case, one radar sensor may be covered by a cover member such as one radar cover.

The LNA 32 amplifies reception signals based on reflection waves R received by the receiving antenna 31 with low noise. The LNA 32 may be a low noise amplifier, which amplifies reception signals supplied from the receiving antenna 31 with low noise. The reception signals amplified by the LNA 32 are supplied to the mixer 33.

The mixer 33 generates beat signals by mixing (multiplying) the reception signals of RF frequency supplied from the LNA 32 with the transmission signals supplied from the synthesizer 22. The beat signals mixed by the mixer 33 are supplied to the IF34.

The IF 34 reduces the frequency of the beat signals to the intermediate frequency (IF) by performing frequency conversion on the beat signals supplied from the mixer 33. The beat signals whose frequency is lowered by the IF 34 are supplied to the AD converter 35.

The AD converter 35 digitizes analog beat signals supplied from the IF 34. The AD converter 35 may be composed of any analog-to-digital converter (ADC) circuit. Beat signals digitized by the AD converter 35 are supplied to the range FFT processor 11 of the controller 10. When more than one receiver 30 is used, beat signals digitized by AD converters 35 may be supplied to the range FFT processor 11.

The range FFT processor 11 estimates the distance between the moving body 100 equipped with the electronic device 1 and the object 200 on the basis of beat signals supplied from the AD converter 35. The range FFT processor 11 may include a processor configured to perform Fast Fourier Transform, for example. In this case, the range FFT processor 11 may be composed of any circuit or chip that performs Fast Fourier Transform (FFT) processing.

The range FFT processor 11 performs FFT processing on the beat signals digitized by the AD converter 35 (hereinafter appropriately referred to as "range FFT processing"). For example, the range FFT processor 11 may perform FFT processing on the complex signals supplied from the AD converter 35. The beat signals digitized by the AD converter 35 can be expressed as a change in signal strength (electrical power) over time. The range FFT processor 11 can express such beat signals as signal strength (electrical power) corresponding to each frequency by performing FFT processing on such beat signals. When a peak is equal to or greater than a predetermined threshold in the result obtained by the range FFT processing, the range FFT processor 11 may determine that the predetermined object 200 is present at the distance corresponding to the peak. For example, in a known method, when a peak value equal to or greater than a threshold is detected from the average power or amplitude of a disturbance signal, like the constant false alarm rate (CFAR) detection processing, it is determined that an object (reflection object) that reflects transmission waves exists.

In this manner, the electronic device 1 of an embodiment can detect the object 200 that reflects transmission waves T, on the basis of transmission signals transmitted as transmission waves T and reception signals received as reflection waves R.

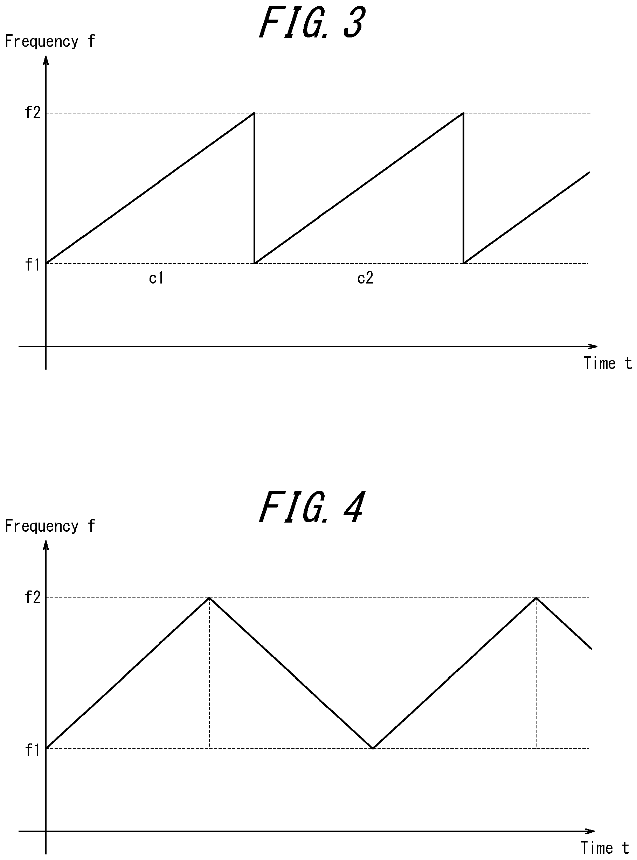

The range FFT processor 11 can estimate the distance to a predetermined object on the basis of on one chirp signal (e.g., c1 illustrated in FIG. 3). That is, the electronic device 1 can measure (estimate) the distance between the object 200 and the moving body 100 illustrated in FIG. 1 by performing the range FFT processing. Since the technique itself for measuring (estimating) the distance to a predetermined object by performing the FFT processing on the beat signals is known, a more detailed description will be simplified or omitted as appropriate. The result of the range FFT processing performed by the range FFT processor 11 (e.g., the distance information) may be supplied to the speed FFT processor 12. Further, the result of the range FFT processing performed by the range FFT processor 11 may be supplied also to the object detector 14.

The speed FFT processor 12 estimates the relative velocity between the moving body 100 equipped with the electronic device 1 and the object 200 on the basis of the beat signals subjected to the range FFT processing by the range FFT processor 11. The speed FFT processor 12 may include a processor configured to perform FFT, for example. In this case, the speed FFT processor 12 may be composed of any circuit or chip that performs a fast fourier transform (FFT) processing.

The speed FFT processor 12 further performs FFT processing on the beat signals subjected to range FFT processing by the range FFT processor 11 (hereinafter, appropriately referred to as "speed FFT processing"). For example, the peed FFT processor 12 may perform FFT processing on the complex signals supplied from the range FFT processor 11. The speed FFT processor 12 can estimate the relative velocity to a predetermined object on the basis of the subframe of chirp signals. When the beat signals are subjected to the range FFT processing as described above, a plurality of vectors can be generated. The relative velocity to a predetermined object can be estimated by obtaining the phase of a peak in the result of performing the speed FFT processing on these vectors. That is, the electronic device 1 can measure (estimate) the relative velocity between the moving body 100 and the predetermined object 200 illustrated in FIG. 1 by performing the speed FFT processing. Since the technique itself for measuring (estimating) the relative velocity to a predetermined object by performing the speed FFT processing on the result of performing the range FFT processing is known, a more detailed description may be simplified or omitted as appropriate. The result (e.g., speed information) of the result of the speed FFT processing performed by the speed FFT processor 12 may be supplied to the arrival angle estimator 13. Further, the result of the speed FFT processing performed by the speed FFT processor 12 may be supplied also to the object detector 14.

The arrival angle estimator 13 estimates the direction in which reflection waves R arrive from the predetermined object 200, on the basis of the result of speed FFT processing performed by the speed FFT processor 12. The electronic device 1 can estimate the direction in which the reflection waves R arrive by receiving the reflection waves R from a plurality of receiving antennas 31. For example, a plurality of receiving antennas 31 are disposed at predetermined intervals. In this case, the transmission waves T transmitted from the transmitting antenna 25 are reflected by the predetermined object 200 and result in reflection waves R, which are received by each of the receiving antennas 31 disposed at predetermined intervals. Then, the arrival angle estimator 13 can estimate the direction in which the reflection waves R arrive at the receiving antennas 31 on the basis of each phase of the reflection waves R received by each of the receiving antennas 31 and the path difference of each of the reflection waves R. That is, the electronic device 1 can measure (estimate) the arrival angle $\theta$ of the reflection wave R on the basis of the result of performing the speed FFT processing. Here, the arrival angle $\theta$ of the reflection wave R may be, for example, the angle formed by the traveling direction of the moving body 100 illustrated in FIG. 1 and the direction in which the reflection wave R arrives at the moving body 100.

Various techniques for estimating the direction in which reflection waves R arrive on the basis of the result of speed FFT processing have been proposed. For example, as a known algorithm for estimating the arriving direction, MUltiple SIgnal Classification (MUSIC), Estimation of Signal Parameters via Rotational Invariance Technique (ESPRIT), and the like are known. Therefore, more detailed description of the known technique will be simplified or omitted as appropriate. The information (angle information) on the arrival angle $\theta$ estimated by the arrival angle estimator 13 may be supplied to the object detector 14.

The object detector 14 detects an object existing in a range in which transmission waves T are transmitted on the basis of the information supplied from at least one of the range FFT processor 11, the speed FFT processor 12 and the arrival angle estimator 13. The object detector 14 may detect an object by performing, for example, clustering processing on the basis of the supplied distance information, the speed information and the angle information. As an algorithm used for data clustering, Density-based spatial clustering of applications with noise (DBSCAN) and the like are known. In the clustering processing, the average power of the points constituting the detected object may be calculated, for example. The distance information, the speed information, the angle information, and the power information of the object detected by the object detector 14 may be supplied to the detection range determining portion 15. Further, the distance information, the speed information, the angle information, and the power information detected by the object detector 14 may also be supplied to the ECU 50. In this case, when the moving body 100 is an automobile, communication may be performed using a communication interface such as controller area network (CAN).

The detection range determining portion 15 determines a range of detecting an object that reflects transmission waves T (hereinafter referred also to as "object detection range") by transmission signals and reception signals. Here, the detection range determining portion 15 may determine a plurality of object detection ranges on the basis of operation by a driver of the moving body 100 equipped with the electronic device 1. For example, when a parking assist button is operated by a driver of the moving body 100, the detection range determining portion 15 may determine a plurality of object detection ranges suitable for assisting the parking. Further, the detection range determining portion 15 may determine a plurality of object detection ranges on the basis of an instruction from the ECU 50, for example. For example, when the ECU 50 determines that the moving body 100 is about to move backwards, the detection range determining portion 15 may determine a plurality of object detection ranges suitable when the moving body 100 moves backward, on the basis of an instruction from the ECU 50. Further, the detection range determining portion 15 may determine a plurality of object detection ranges on the basis of a change in operating condition such as a steering, an accelerator, or a gear in the moving body 100. Moreover, the detection range determining portion 15 may determine a plurality of object detection ranges on the basis of the result of detecting an object by the object detector 14.

The parameter setting portion 16 sets various parameters that specify transmission signals and reception signals for detecting an object that reflects transmission waves T as reflection waves R. That is, the parameter setting portion 16 sets various parameters for transmitting transmission waves T from the transmitting antenna 25 and various parameters for receiving reflection waves R from the receiving antenna 31.

In particular, in an embodiment, the parameter setting portion 16 may set various parameters for transmitting transmission waves T and receiving reflection waves R to detect an object in the above described object detection range. For example, the parameter setting portion 16 may specify the range in which the reflection waves R are desired to be received in order to receive the reflection waves R and detect an object in the object detection range. Further, for example, the parameter setting portion 16 may specify the range in which the beam of the transmission waves T is desired to be directed in order to transmit transmission waves T from a plurality of transmitting antennas 25 and detect an object in the object detection range. In addition, the parameter setting portion 16 may set various parameters for transmitting transmission waves T and receiving reflection waves R. The values set by the parameter setting portion 16 include, for example, the transmission frequency, the transmission frequency band, the transmission wave phase, the reception wave phase, the signal transmission timing, the signal transmission time, the chirp signal amplitude, the chirp signal cycle, the selection value of the transmitting antenna to be used, the selection value of the receiving antenna to be used, the number of transmitting antennas to be used, the number of receiving antennas to be used, and/or the transmission power.

Various parameters set by the parameter setting portion 16 may be supplied to the signal generator 21. Then, the signal generator 21 can generate transmission signals to be transmitted as transmission waves T, on the basis of the various parameters set by the parameter setting portion 16. The various parameters set by the parameter setting portion 16 may be supplied to the transmitter 20, the receiver 30 and the object detector 14. In this manner, the object detector 14 can perform processing for detecting an object in an object detection range determined on the basis of various parameters set by the parameter setting portion 16.

The ECU 50 included in the electronic device 1 according to an embodiment can control the operation of the entire moving body 100, including control of each function part constituting the moving body 100. The ECU 50 may include at least one processor such as Central Processing Unit (CPU), for example, to provide control and processing power for implementing various functions. The ECU 50 may be realized collectively by one processor, by some processors, or by individual processors. The processor may be realized as a single integrated circuit. The processor may be realized as a plurality of communicably connected integrated circuits and discrete circuits. The processor may be realized on the basis of various other known techniques. In an embodiment, the ECU 50 may be configured as, for example, a CPU and a program executed by the CPU. The ECU 50 may appropriately include a memory necessary for operating the ECU 50. Further, at least a part of the functions of the controller 10 may be a function of the ECU 50, and at least a part of the functions of the ECU 50 may be a function of the controller 10.

The electronic device 1 illustrated in FIG. 2 includes two transmitting antennas 25 and N receiving antennas 31. However, the electronic device 1 of an embodiment may include any number of transmitting antennas 25 and any number of receiving antennas 31. For example, when the electronic device 1 includes two transmitting antennas 25 and four receiving antennas 31, it can be regarded as including a virtual antenna array that is virtually composed of eight antennas. In this manner, the electronic device 1 may use eight virtual antennas for receiving reflection waves R of 16 sub-frames.

Next, operation of the electronic device 1 according to an embodiment will be described.

Recent sensors capable of detecting obstacles existing around vehicles such as automobiles include, for example, a millimeter-wave radar, LiDAR (Light Detection and Ranging, Laser Imaging Detection and Ranging), and an ultrasonic sensor. Among these sensors, a millimeter-wave radar is often adopted from the viewpoint of accuracy and reliability in terms of detection of an obstacle, cost, and the like.

Technologies for detecting an obstacle and the like around a vehicle by using a millimeter-wave radar include, for example, blind spot detection (BSD), cross traffic alert (CTA) for a vehicle that backs up or leaves, and free space detection (FSD). In these detections, it is common to determine the object detection range by presetting the radio wave radiation range that depends on the physical shape of the millimeter-wave radar antenna. That is, in each radar, the physical shape of the antenna of the millimeter-wave radar is predetermined according to the application or the function of each radar, and it is common that the object detection range is defined in advance. Thus, in order to realize functions of a plurality of different radars, a plurality of different radar sensors will be required.

However, it is disadvantageous in terms of cost to prepare a plurality of radar sensors according to the application or function. Further, for example, if the physical shape of antenna is predetermined and the radiation range is also determined, it is difficult to change the application and function of the antenna. Further, for example, when the physical shape of antenna and the radiation range are determined and all of the objects in the radiation range are detected, the amount of information to be processed increases. In this case, since there is a possibility that an unnecessary object may be erroneously detected as a target object, the reliability of detection may decrease. Further, for example, if the physical shape and radiation range of antenna are determined and the number of sensors to be mounted is increased, the fuel efficiency will decrease due to an increase in the weight of the vehicle (mainly harness) or the fuel efficiency will decrease due to an increase in power consumption. Moreover, when detection is performed by using a plurality of radar sensors, a delay may occur between the sensors. Therefore, if automatic driving or driving assist is performed on the basis of such detection, processing may take time. This is because the CAN processing speed is slower than the radar update rate, and besides, feedback also takes time. Further, when detection is performed by using a plurality of sensors having different object detection ranges, control can be complicated.

Therefore, in the electronic device 1 according to an embodiment, one radar sensor can be used for a plurality of functions or applications. Further, the electronic device 1 according to an embodiment enables operation as if multiple functions or applications were realized simultaneously by one radar sensor.

FIGS. 3, 4, 5 and 6 illustrate an example of a signal generated by the signal generator 21 and passed through the synthesizer 22. The signal after passing through the synthesizer 22 is also referred to as a signal generated by the signal generator 21.

In FIGS. 3, 4, 5 and 6, the horizontal axis represents the time t and the vertical axis represents the frequency f.

That is, FIGS. 3, 4, 5 and 6 illustrate a state where the frequency f of the signal generated by the signal generator 21 changes over time. In an embodiment, the signal generated by the signal generator 21 may be a signal whose frequency f changes over time. In particular, as illustrated in FIGS. 3, 4, 5 and 6, the signal generator 21 may generate a signal whose frequency f changes periodically and linearly (linear chirp signal). For example, the signal generator 21 may generate the chirp signal as illustrated in FIGS. 3, 4, 5 and 6. The signal generated by the signal generator 21 may be preset in the controller 10, for example.

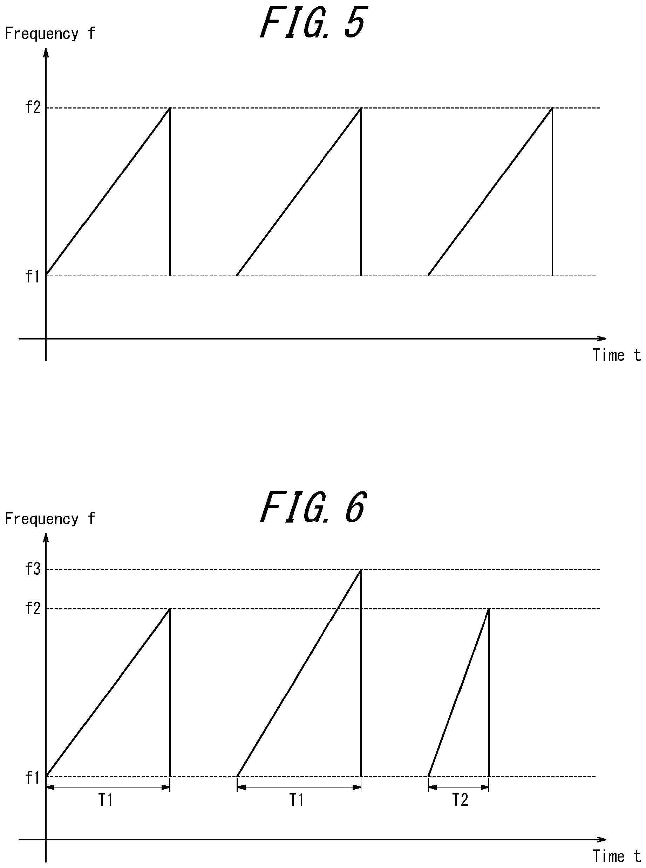

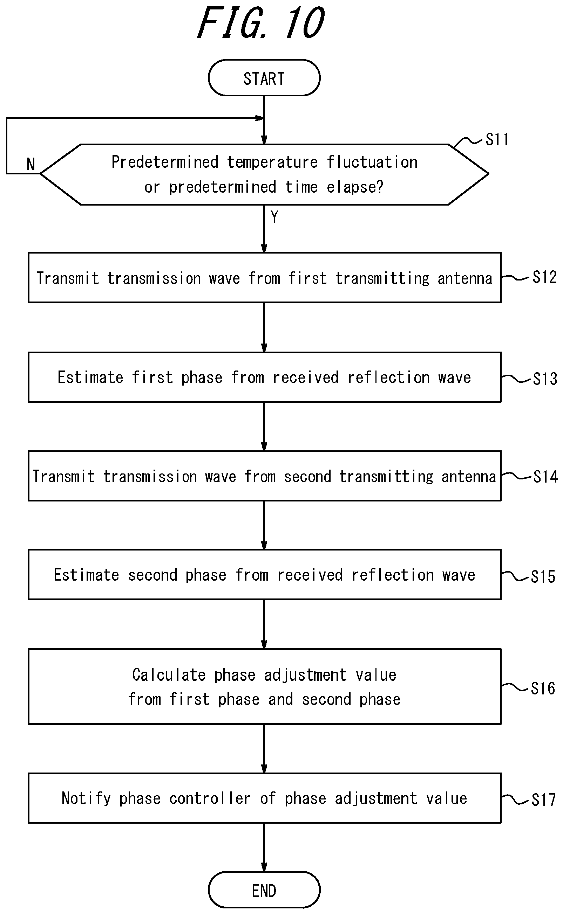

FIGS. 3, 4 and 5 illustrate an example in which the signal generator 21 generates a signal with a frequency band of f1-f2. Here, for example, the frequency f1 = 77 GHz and the frequency f2 = 81 GHz. FIG. 3 illustrates an example of a signal in which the frequency f periodically repeats a linear increase (up chirp) from f1 to f2. Further, FIG. 4 illustrates an example of generating a signal in which the frequency f periodically repeats linear increase (up chirp) and decrease (down chirp) from f1 to f2. The electronic device 1 transmits a signal generated by the signal generator 21 as described above from the transmitting antenna 25 as a transmission wave. Since the chirp signal used in the technical field such as radar is known, more detailed description will be simplified or omitted as appropriate. As illustrated in FIG. 2, signals generated by the signal generator 21 are supplied to the phase controller 23 via the synthesizer 22. FIG. 5 illustrates an example of a discrete signal in which the frequency f periodically repeats a linear increase (up chirp) from f1 to f2. FIG. 6 illustrates an example in which the signal generator 21 generates a discrete signal with frequency bandwidths of f1, f2, and f3. As illustrated in FIG. 10, the signal generator 21 may generate signals with different frequencies. The signal generator 21 may generate any number of two or more different types of frequencies.

In this manner, the electronic device 1 according to an embodiment transmits transmission waves T from a plurality of transmitting antennas 25. Here, the transmission wave T may be radio wave whose frequency changes over time. In particular, the electronic device 1 may transmit transmission waves T whose frequency f changes periodically and linearly. Typically, the electronic device 1 may transmit a chirp signal as illustrated in FIGS. 3, 4, 5 and 6 as a transmission wave T. Further, the electronic device 1 may transmit a radio wave with the millimeter-wave band as a transmission wave T, in particular, a radio wave with frequency band from 77 GHz to 81 GHz.

Information on the frequency f of the signal generated by the signal generator 21 can be ascertained by the phase controller 23. That is, the phase controller 23 can recognize the frequency f of the signal generated by the signal generator 21 at any time. For example, at least one of the signal generator 21 and the controller 10 may transmit the information on the frequency f of the signal generated by the signal generator 21 to the phase controller 23. Conversely, the phase controller 23 may obtain the information on the frequency f of the signal generated by the signal generator 21 from at least one of the signal generator 21 and the controller 10.

With reference to FIG. 2 again, the phase controller 23 of the transmitter 20 controls the phase of the signal generated by the signal generator 21 under control of the controller 10. The phase controller 23 may be configured as, for example, a CPU and a program executed by the CPU. As described above, the phase controller 23 can control (change) the direction of the beam of the transmission wave by controlling the phase of the signal generated by the signal generator 21 and passed through the synthesizer 22. Further, in an embodiment, the phase controller 23 can further adjust the phase when controlling the phase. Such phase control and phase adjustment by the phase controller 23 will be further described later. The signal controlled and/or adjusted by the phase controller 23 is supplied to the transmitting antenna 25 via the amplifier 24. In an embodiment, the phase controller 23 may be configured as, for example, a CPU and a program executed by the CPU. Further, the phase controller 23 may include a storage such as a memory required for the operation of the phase controller 23 as appropriate.

The transmitting antenna 25A and the transmitting antenna 25B output (transmit) transmission signals supplied from the amplifier 24A and the amplifier 24B as transmission waves T. In FIG. 2, the electronic device 1 transmits transmission waves T from two transmitting antennas such as the transmitting antenna 25A and the transmitting antenna 25B. However, the electronic device 1 may transmit transmission waves T from any number of two or more transmitting antennas. That is, the electronic device 1 may include any number of two or more transmitting antennas. In the present disclosure, when the transmitting antenna 25A and the transmitting antenna 25B are not specifically distinguished each other, they are simply referred to as "transmitting antenna 25." The electronic device 1 according to an embodiment transmits transmission waves T from a plurality of transmitting antennas 25. Since the transmitting antenna 25 can be configured in the same manner as the transmitting antenna used for known radars, a more detailed description thereof will be omitted.

FIG. 2 schematically illustrates a state where a plurality of transmitting antennas 25 transmit transmission waves T. In FIG. 2, the wave of the transmission wave T reflected by the object 200 is illustrated as the reflection wave R. The radio wave of the transmission wave T transmitted from a plurality of transmitting antennas 25 and reflected by the object 200 is referred to as a reflection wave R. Here, the object 200 may be a vehicle other than the moving body 100, or any object other than the moving body 100, such as a pedestrian or an obstacle,. Further, FIG. 2 schematically illustrates a state where a receiving antenna 31A, a receiving antennas 31B, ... and a receiving antennas 31N receive the reflection wave R.

In FIG. 2, the electronic device 1 receives the reflection wave R from a plurality of receiving antennas 31A, 31B, ... and 31N. However, the electronic device 1 may receive the reflection wave R from any number of receiving antennas 31.

That is, the electronic device 1 may include any number of receiving antennas 31. In the present disclosure, when the receiving antenna 31A, the receiving antenna 31B, ... and the receiving antenna 31N are not specifically distinguished each other, they are simply referred to as "receiving antenna 31." Since the receiving antenna 31 can be configured in the same manner as the receiving antennas used for known radars, a more detailed description thereof will be omitted.

Reception signals based on reflection waves R received by the receiving antenna 31 are supplied to the AD converter 35 via the LNA 32, the mixer 33, the IF 34, and the like. Reception signals (analog signals) based on reflection waves R received by the receiving antenna 31 often contain noise components. Thus, it is assumed that it would be difficult to convert the analog signals based on the reflection waves R received by the receiving antenna 31, as they are, to digital signals by the AD converter 35. Therefore, the reception signals based on reflection waves R received by the receiving antenna 31 are subjected to filter processing for adjustment. The reception signals thus adjusted are supplied to the AD converter 35.

The AD converter 35 converts the supplied analog signals into digital signals. The AD converter 35 may be configured as a CPU or a program executed by the CPU. The reception signals converted from analog to digital by the AD converter 35 are supplied to the controller 10.

The range FFT processor 11 estimates the distance between the moving body 100 equipped with the electronic device 1 and the object 200 on the basis of the reception signals supplied from the AD converter 35. Since a radar technology for measuring (estimating) the distance between a predetermined object and the transmitter/receiver of radio waves by transmitting radio waves to the predetermined object and receiving the reflection waves thereof is known, a more detailed description is omitted. The information on the distance estimated by the range FFT processor 11 is supplied to the object detector 14, for example.

The speed FFT processor 12 estimates the relative velocity between the moving body 100 equipped with the electronic device 1 and the object 200 on the basis of the reception signals supplied from the AD converter 35. Radar technology for measuring (estimating) the relative velocity between a predetermined object and the radio wave transmitter and receiver by transmitting radio waves to the predetermined object and receiving reflection waves thereof for measurement is known. Thus more detailed description will be omitted. The information on the distance estimated by the speed FFT processor 12 is supplied to the object detector 14, for example.

The arrival angle estimator 13 estimates the direction (for example, the azimuth) from the moving body 100 equipped with the electronic device 1 toward the object 200 on the basis of the reception signals supplied from the AD converter 35. The radar technology for measuring (estimating) the direction from the transmitter/receiver of radio waves toward the predetermined object by transmitting radio waves to the predetermined object and receiving the reflection waves thereof for measurement is also known. Thus more detailed description thereof will be omitted. The information on the direction (azimuth) estimated by the arrival angle estimator 13 is supplied to the object detector 14, for example. As a technology for estimating the direction (azimuth) by the arrival angle estimator 13, a technology for using the principle of an interferometer that utilizes the phase difference of the reception signal of a two-element array, the beam former technology for scanning the main lobe of the array antenna to find the direction in which power increases, the linear prediction technology for scanning the null of the array antenna to estimate the direction, Multiple Signal Classification (MUSIC) technology, Estimation of Signal Parameters via Rotational Invariance Techniques (ESPRIT) technique and/or Multiple Input Multiple Output (MIMO) technology, for example, may be used.

The object detector 14 can perform various calculations, estimations and controls from the information on the distance, the relative velocity, and/or the direction (angle) supplied from the range FFT processor 11, the speed FFT processor 12 and the arrival angle estimator 13, respectively. For example, the object detector 14 may measure (estimate) the relative velocity between the object 200 and the moving body 100 on the basis of the obtained information. In this manner, in the electronic device 1 according to an embodiment, the object detector 14 may estimate at least one of the distance to the object 200, the azimuth with respect to the object 200 and the relative velocity with respect to the object 200 on the basis of the reflection wave R received by the receiving antenna 31.

Further, when the distance between the detected object 200 and the moving body 100 is within a predetermined distance, the controller 10 may issue a predetermined warning to a driver of the moving body 100, for example. Further, in the above described case, the controller 10 may control so that a brake of the moving body 100 is started, for example. Moreover, when the detected object 200 is located in a predetermined direction from the moving body 100, the controller 10 may issue the above described warning or control the start of the brake. In an embodiment, the controller 10 can perform various controls based on the distance or relative velocity with respect to the object 200, the direction of the object 200, and the like. Such a control can be various controls as proposed in the technical field in which a radar is used, and is not limited to specific controls.

Next, transmission waves transmitted by the electronic device 1 of an embodiment will be described.

When measuring a distance with a millimeter-wave radar, a frequency-modulated continuous wave (FMCW) radar (hereinafter referred to as a FMCW radar) is often used. The FMCW radar sweeps frequency of a radio wave to be transmitted to generate a transmission signal. Therefore, in a millimeter-wave FMCW radar using radio waves in the frequency band of 79 GHz, for example, the frequency of radio waves to be used will have a frequency bandwidth of 4 GHz such as from 77 GHz to 81 GHz, for example. The radar in the frequency band of 79 GHz is characterized by a usable frequency bandwidth that is wider than that of other millimeter/quasi-millimeter-wave radars, such as 24 GHz, 60 GHz, or 76 GHz frequency band.

The above described embodiment will be described below. The FMCW radar method used in the present disclosure may include the FCM (Fast-Chirp Modulation) method in which chirp signals are transmitted at a cycle shorter than usual. The signals generated by the signal generator 21 are not limited to FM-CW signals. The signals generated by the signal generator 21 may be those generated by various methods other than the FMCW method. The transmission signal string stored in the memory 18 may be different depending on these various methods. For example, in the case of the above described FMCW radar signals, signals whose frequency increases and signals whose frequency decreases may be used for each time sample. Since known techniques can be appropriately applied to the various methods described above, more detailed description thereof will be omitted.

As described above, the transmission waves can be strengthened in a predetermined direction by forming a beam of radio waves transmitted from a plurality of transmitting antennas 25 (beamforming). In this manner, it is expected that the accuracy of measuring the distance between the moving body 100 equipped with the electronic device 1 and the object 200 and/or the direction of the object 200 is improved. Therefore, the electronic device 1 according to an embodiment uses, as transmission waves, radio waves whose frequency changes over time, such as FMCW radars, and performs beamforming by such transmission waves. Such an embodiment will be further described below.

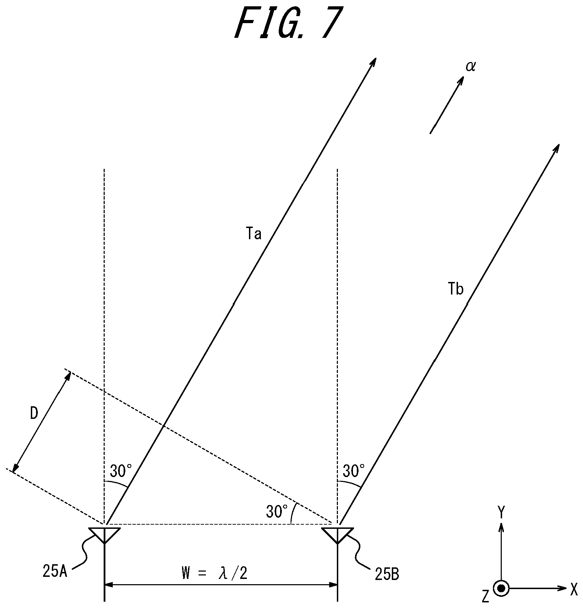

FIG. 7 is a diagram illustrating transmission waves transmitted by the electronic device 1. In FIG. 7, two antennas such as the transmitting antenna 25A and the transmitting antenna 25B are disposed. However, in an embodiment, any number of transmitting antennas 25 may be disposed.

As illustrated in FIG. 7, in the electronic device 1, the transmitting antenna 25A and the transmitting antenna 25B are disposed so as to be separated by a distance W. The following will be described assuming that a plurality of transmitting antennas 25 disposed in the above described manner form a beam of radio wave at an angle of 30° to the right (direction $\alpha$ illustrated in FIG. 7) from the Y-axis positive direction. That is, the case in which beamforming is performed in the direction $\alpha$, which is 30° to the right with respect to the Y-axis positive direction will be described below.

It is assumed that the distance W between the transmitting antenna 25A and the transmitting antenna 25B illustrated in FIG. 7 is $\lambda/2$, where $\lambda$ is a wavelength of the transmission wave. Here, the case in which radio waves having a frequency of 79 GHz are transmitted from the transmitting antenna 25 will be examined. In this case, when the speed of light is $c = 3.0 \times 10^8$ [m/s], the wavelength $\lambda$ of transmission wave $(= c/f = 3.0 \times 10^8 \text{ [m/s]}/79 \times 10^9)$ is 3.7975 [mm]. Thus the distance $W = \lambda/2$ between the transmitting antenna 25A and the transmitting antenna 25B is 1.8987 [mm].

In this manner, a path difference occurs between transmission waves transmitted respectively in the direction $\alpha$ from the two transmitting antennas 25 disposed separately by the distance W = 1.8987 [mm]. As illustrated in FIG. 7, the transmission wave transmitted from the transmitting antenna 25A in the direction $\alpha$ is referred to as a transmission wave Ta, and the transmission wave transmitted from the transmitting antenna 25B in the direction $\alpha$ is referred to as a transmission wave Tb. Further, when the transmission wave Ta and the transmission wave Tb are not particularly distinguished each other in the present disclosure, they are simply referred to as "transmission wave T." In the case as illustrated in FIG. 7, the path of the transmission wave Ta is longer than that of the transmission wave Tb by the path difference D. Therefore, the electronic device 1 according to an embodiment controls a phase of at least one of the transmission wave Ta and the transmission wave Tb according to the path difference D between the transmission wave Ta and the transmission wave Tb in the direction $\alpha$. Specifically, the electronic device 1 controls so that the phases of the transmission wave Ta and the transmission wave Tb transmitted from the transmitting antenna 25A and the transmitting antenna 25B, respectively, are aligned in the direction $\alpha$. As a result, the transmission wave Ta and the transmission wave Tb transmitted from the transmitting antenna 25A and the transmitting antenna 25B, respectively, strengthen each other in the direction $\alpha$.

As illustrated in FIG. 7, the path difference D between the transmission wave Ta and the transmission wave Tb in the direction $\alpha$ can be expressed as $W \cdot \sin 30°$ by using the distance W of the transmitting antenna 25. Therefore, the path difference D = W/2 will be 0.9494[mm]. Further, since this path difference D = W/2 is $W = \lambda/2$ when the wavelength $\lambda$ is used, it can be expressed as the path difference D = $\lambda/4$. From this equation, it can be seen that the path difference D corresponds to 1/4 of the wavelength $\lambda$, that is, the phase of 90° $(\pi/2)$. In such a case, the electronic device 1 according to an embodiment controls so that the phase of the transmission wave Ta transmitted from the transmitting antenna 25A is output ahead of the phase of the transmission wave Tb transmitted from the transmitting antenna 25B by 90°. For example, the phase controller 23 may change at least one of the phase of the transmission wave Ta and the phase of the transmission wave Tb so that the phase of the transmission wave Ta is earlier than that of the transmission wave Tb by 90°. Under such a control, the phase of the transmission wave Ta and the phase of the transmission wave Tb are aligned in the direction $\alpha$. Therefore, in this case, the transmission wave Ta and the transmission wave Tb transmitted from a plurality of transmitting antennas 25 strengthen each other in the direction $\alpha$ and form a beam of radio waves in the direction $\alpha$.

In the example illustrated in FIG. 7, the case in which a beam of radio wave at an angle of 30° to the right (direction $\alpha$ illustrated in FIG. 7) from the Y-axis positive direction is formed by a plurality of transmitting antennas 25 has been described. However, the electronic device 1 can also form a beam toward a direction other than the direction $\alpha$ by controlling at least one of the phase of the transmission wave Ta and the phase of the transmission wave Tb. For example, the electronic device 1 can form a beam directed in a direction forming various angles with respect to the Y-axis positive direction by controlling at least one of the phase of transmission wave Ta and the phase of transmission wave Tb.

In this case, the correlation between the predetermined direction in which the beam of transmission wave T is formed and the phase controlled when forming such a beam (control amount of the phase) may be stored in advance in at least one of the memory 18 connected to the controller 10 and the phase controller 23. That is, the correspondence between the path difference D in a predetermined direction of the beam of transmission wave T transmitted from a plurality of transmitting antennas 25 and the phase of transmission wave T corresponding to the path difference D may be stored in advance in at least one of the memory 18 connected to the controller 10 and the phase controller 23, for example. On the other hand, such a correlation or a correspondence may be calculated, for example, in at least one of the controller 10 and the phase controller 23. Further, such a correlation or a correspondence may be stored or calculated with respect to transmission waves T of various frequencies f.

In this manner, in the electronic device 1 according to an embodiment, the phase controller 23 controls a phase of at least one of the transmission waves T transmitted from a plurality of transmitting antennas 25 so that the phases of respective transmission waves T transmitted from the transmitting antennas 25 are aligned in a predetermined direction $\alpha$. In particular, the phase controller 23 may control a phase of at least one of transmission waves T depending on the path difference D of each of the transmission waves T transmitted from a plurality of transmitting antennas 25 in a predetermined direction $\alpha$. Thus the electronic device 1 according to an embodiment includes at least the phase controller 23. Further, the electronic device 1 according to an embodiment may include the controller 10 as appropriate, for example, in addition to the phase controller 23.

An example in which a beam in the direction $\alpha$ is formed when the frequency f of the radio wave transmitted from a plurality of transmitting antennas 25 is 79 GHz has been described above. In this case, as described above, the electronic device 1 can align the phase of the transmission wave Ta and the phase of the transmission wave Tb in the direction $\alpha$ by advancing the phase of the transmission wave Ta by 90° ($\pi/2$).

However, as described above, the electronic device 1 transmits a radio wave (e.g., chirp signal) whose frequency f changes over time. That is, the frequency f of a transmission wave transmitted by the electronic device 1 from the transmitting antenna 25 changes over time. In this case, as the frequency f of transmission wave T changes, the wavelength $\lambda$ of the transmission wave also changes. Therefore, the phase of transmission wave Ta and the phase of transmission wave Tb may not be aligned in the direction $\alpha$ even if the phase is advanced by 90° ($\pi/2$) as described above, after the frequency f of transmission wave T changes. Such an example will be described below.

In the following description, it is assumed that the distance W (= 1.8987 [mm]) between the transmitting antenna 25A and the transmitting antenna 25B does not change. Further, it is assumed that a beam of radio waves is formed by a plurality of transmitting antennas 25 by tilting the beam to the right from the Y-axis positive direction by 30° (the direction $\alpha$ illustrated in FIG. 7). Therefore, the path difference D (= 0.9494[mm]) between the transmission wave Ta and the transmission wave Tb may also not change.

For example, the case in which the frequency of radio waves transmitted from a plurality of transmitting antennas 25 are 77 GHz will be examined. The wavelength $\lambda$ when the frequency f of transmission wave Ta is 77 GHz is larger than that when the frequency f of transmission wave Ta is 79 GHz. In this case, when the phase of the transmission wave Ta transmitted from the transmitting antenna 25A is advanced by 90° ($\pi/2$) and output in the same manner, the phase of the transmission wave Ta will be advanced by a length larger than the path difference D. That is, in this case, when the phase of transmission wave Ta is advanced by 90 ° ($\pi/2$) and output, the direction in which transmission waves transmitted from a plurality of transmitting antennas are strengthened each other shifts to the right (X-axis positive direction side) from the direction $\alpha$. Thus, the radio waves transmitted from a plurality of transmitting antennas 25 cannot be beamformed in the direction $\alpha$.

Next, for example, the case in which the frequency f of radio waves transmitted from a plurality of transmitting antennas 25 is 81 GHz will be examined. The wavelength $\lambda$ when the frequency f of transmission wave Ta is 81 GHz is smaller than that when the frequency f of transmission wave Ta is 79 GHz. In this case, when the phase of the transmission wave Ta transmitted from the transmitting antenna 25A is advanced by 90° ($\pi/2$) and output in the same manner, the phase of transmission wave Ta is advanced by a length less than the path difference D. That is, in this case, when the phase of transmission wave Ta is advanced by 90° ($\pi/2$) and output, the direction in which transmission waves transmitted from a plurality of transmitting antennas strengthen each other shifts to the left (X-axis negative direction side) from the direction $\alpha$. Thus, the radio waves transmitted from a plurality of transmitting antennas 25 cannot be beamformed in the direction $\alpha$.

As described above, when the frequency changes, for example, like the FMCW radar that transmits radio wave of 77 to 81 GHz, the direction in which the transmission signals transmitted from a plurality of transmitting antennas 25 are strengthened each other will have variance. That is, even if at least one of the phase of transmission wave Ta and the phase of transmission wave Tb is controlled in consideration of the path difference D between the transmission wave Ta and the transmission wave Tb, it is difficult to form a beam of radio waves precisely in a desired direction.

Thus, in the electronic device 1 according to an embodiment, the phase controller 23 controls the phase of transmission wave T according to the frequency f of transmission wave T, for example. The phase adjustment of transmission wave Ta will be described below corresponding to the above example.

First, as described in the above example, the case in which the frequency f of transmission wave T transmitted from a plurality of transmitting antennas 25 is 77 GHz will be examined. The wavelength $\lambda$ of transmission wave T having a frequency f of 77 GHz (= c/f = 3.0 × 108 [m/s]/77 × 109) is 3.896 [mm]. Therefore, the phase corresponding to the length of path difference D ((path difference D/wavelength $\lambda$) × 360° = (0.9494 [mm]/3.896 [mm]) × 360° ) is 87.72°. From the above, when the frequency f of transmission wave T is 77 GHz, if the phase is advanced by 87.72° and output, the signals in the direction $\alpha$ are strengthened each other. Therefore, in the electronic device 1, the phase controller 23 may control the phase of transmission wave Ta to be advanced by 87.72° instead of 90° , and output when the frequency f of transmission wave T is 77 GHz. Further, when the frequency f of transmission wave T is 77 GHz, the phase controller 23 may adjust the phase so as to be decreased by 2.28° from 90° determined as the phase of transmission wave Ta. In this case as well, as a result, the phase of transmission wave Ta is advanced by 87.72° and output.

Next, as described in the above example, the case in which the frequency f of transmission wave T transmitted from a plurality of transmitting antennas 25 is 81 GHz will be examined. The wavelength $\lambda$ of transmission wave T having a frequency f of 81 GHz (= c/f = 3.0 × 108 [m/s]/81 × 109) is 3.704 [mm]. Therefore, the phase corresponding to the length of path difference D ((path difference D/wavelength $\lambda$) × 360° = (0.9494 [mm]/3.704 [mm]) × 360°) is 92.27°. From the above, when the frequency f of transmission wave T is 81 GHz, the signals in the direction $\alpha$ are strengthened each other when the phase is advanced by 92.27° and output. Therefore, in the electronic device 1, the phase controller 23 may control the phase of transmission wave Ta to be advanced by 92.27° instead of 90° and output when the frequency f of transmission waves T is 81 GHz. Further, the phase controller 23 may adjust the phase so as to be increased by 2.27° from 90° determined as the phase of the transmission wave Ta, when the frequency f of transmission waves T is 81 GHz. In this case as well, as a result, the phase of transmission wave Ta is advanced by 92.27° and output.

In this manner, in the electronic device 1 according to the invention, the phase controller 23 may adjust a phase of at least one of transmission waves T on the basis of the frequency f of transmission wave T.

Supposing the time t dependence of the frequency of the chirp signal is f = f (t) and the speed of light is c, for example, then $\lambda$ (t) = c/f (t). Therefore, supposing the distance between the antennas is W and the transmission angle in the direction perpendicular to the direction in which the antennas are arranged (broadside direction) is $\theta$, then the phase adjustment amount S (t) of transmission wave is expressed as follows.

$$S\,(t,\,\theta) = \{W\sin\theta\}/\lambda\,(t) \times 360° = \{W\sin\theta\}/c \times f\,(t) \times 360°$$

Here, f (t) is not particularly limited. For example, if the signal is as illustrated in FIG. 3, f (t) is expressed as follows, where the period of the signal is Tc.

$$f\,(t) = \{(f2 - f1)/Tc\}t + f1\ (0 \leq t \leq Tc,\ f\,(t) = f\,(t + Tc))$$

Further, for example, if the signal is as illustrated in FIG. 4, f (t) is expressed as follows, in the equation the period of the signal is Tc.

$$f\,(t) = \{2\,(f2 - f1)/Tc\}t + f1\ (0 \leq t < Tc/2, f\,(t) = f\,(t + Tc)),$$

$$f\,(t) = -\{2\,(f2 - f1)/Tc\}t - f1 + 2f2\ (Tc/2 \leq t < Tc,\ f\,(t) = f\,(t+Tc))$$

f (t) is not limited to the above described function, and may be any other appropriate functions.

As described above, in order to adjust the phase on the basis of the frequency f of transmission wave T, the correspondence between the frequency f of transmission wave T and the adjustment amount of the phase may be stored in advance, for example, in at least one of the memory 18 connected to the controller 10 and the phase controller 23. Further, when beamforming is performed in a direction different from the direction $\alpha$, the length of the path difference D between the transmission wave Ta and the transmission wave Tb in that direction is also different. Therefore, the length of the path difference D between the transmission wave Ta and the transmission wave Tb when the direction of beamforming is changed in various manners may also be stored in advance, for example, in at least one of the memory 18 connected to the controller 10 and the phase controller 23. Moreover, the correspondence between the frequency f of transmission wave T and the adjustment amount of the phase may be stored in advance, for example, in at least one of the memory 18 connected to the controller 10 and the phase controller 23 according to the path difference D between the transmission wave Ta and the transmission wave Tb in the case where the direction of beamforming varies. As described above, the adjustment amount of the phase in various cases may be stored in advance in at least one of the memory 18 connected to the controller 10 and the phase controller 23. By storing the phase adjustment amount in various cases, the phase controller 23 can read out the phase adjustment amount required when performing phase adjustment corresponding to the frequency f of transmission wave T.

In this manner, in the electronic device 1 according to an embodiment, the phase controller 23 may adjust a phase of at least one of transmission waves T on the basis of the adjustment amount of the phase read out corresponding to the frequency f of transmission wave T.

Further, without storing in advance the adjustment amount of the phase corresponding to the frequency f of transmission wave T in various cases, the phase controller 23 or the like may calculate the corresponding phase adjustment amount, on the basis of the frequency f of transmission wave T transmitted from a plurality of transmitting antennas 25. For example, when the signal generator 21 generates a chirp signal as illustrated in FIGS. 3, 4, 5 and 6, the controller 10 or the phase controller 23 can recognize the frequency f of the chirp signal at any point in time, as described above. Therefore, for example, at least one of the controller 10 (or the memory 18) and/or the phase controller 23 may store the necessary algorithms and/or formulas, etc., so that the phase controller 23 can calculate the phase adjustment amount corresponding to the situation.

The phase controller 23 calculates the output signal by receiving an input signal from the signal generator 21 and further obtaining the information on the frequency f from at least one of the controller 10 and/or the phase controller 23. The input signal received by the phase controller 23 from the signal generator 21 at the time t is expressed as $e \times p(j \cdot 2\pi f(t) \cdot t + \delta(\theta))$, where j is an imaginary unit, $f(t)$ is a time-dependent frequency, and $\delta(\theta)$ is a phase to be controlled by the phase controller 23 according to the path difference D (the phase adjustment amount is not considered). The frequency f of the input signal received from at least one of the controller 10 and/or the phase controller 23 is expressed as $f(t)$. The output signal output by the phase controller 23 in consideration of the phase adjustment amount is expressed as $e \times p(j \cdot 2\pi f(t) \cdot t + \delta(\theta) + S(t, \theta))$. Here, $S(t, \theta)$ is a coefficient calculated by the phase controller 23 and corresponds to the phase adjustment amount. The phase controller 23 adjusts a phase of transmission wave T by performing such a complex multiplication process.

In this manner, in the electronic device 1 according to an embodiment, the phase controller 23 may adjust a phase of at least one of transmission waves T on the basis of the phase adjustment amount calculated from the frequency f of transmission waves T.

Moreover, the adjustment of the phase performed by the phase controller 23 may be realized by performing a filtering process that depends on the frequency f of transmission wave T. For example, a frequency-dependent filter, such as a low-pass filter, that allows low-bandwidth frequencies to pass and blocks high-bandwidth frequencies, is known. By applying such a principle, the phase controller 23 may perform an operation (filter processing) such that the phase adjustment amount gradually increases, for example, as the frequency f of transmission wave T increases (over time).

In this manner, the phase controller 23 may adjust a phase of at least one of transmission waves T on the basis of the adjustment amount of the phase obtained by the filter processing of the frequency of transmission wave T.

Next, an example of the operation of the electronic device 1 according to an embodiment will be described.

The electronic device 1 according to an embodiment includes an aspect of transmitting transmission wave T from the transmitting antenna 25 in its feature. The operation of the electronic device 1 after transmitting transmission wave T from the transmitting antenna 25 (e.g., the operation of receiving reflection wave R and the measurement or estimation based on the reflection wave R) can employ various known radar techniques. Therefore, the operation until the electronic device 1 transmits the transmission wave T from the transmitting antenna 25 will be described below, and the description of the other operations will be omitted.

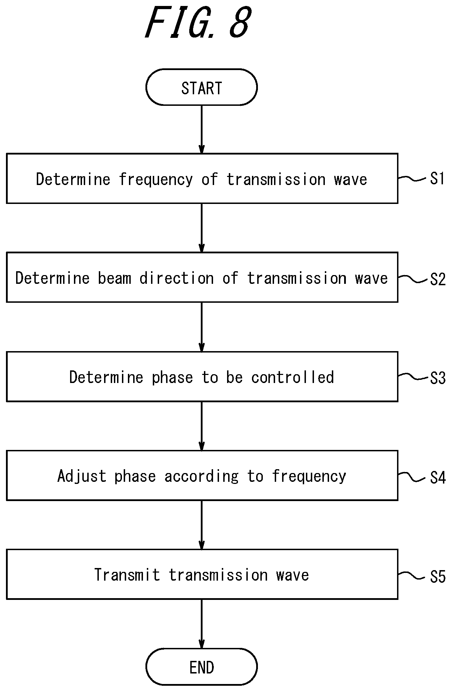

FIG. 8 is a flowchart illustrating an operation of the electronic device 1 according to an embodiment. The operation illustrated in FIG. 8 may be started when, for example, the electronic device 1 starts detecting an object 200 existing around the moving body 100 or the like. That is, the operation illustrated in FIG. 8 may be started when the electronic device 1 starts transmitting transmission waves T from a plurality of transmitting antennas 25.

When the operation illustrated in FIG. 8 is started, the controller 10 of the electronic device 1 determines the frequency f of transmission wave T transmitted from a plurality of transmitting antennas 25 (step S1). The signal generator 21 may generate a signal whose frequency f changes over time, for example, as illustrated in FIGS. 3, 4, 5, and 6. Therefore, the frequency f of transmission wave T determined by the controller 10 at each point in time may be preset in the controller 10, for example. On the other hand, in step S1, the signal generator 21 (rather than the controller 10) may determine the frequency f of the signal generated by itself at each point in time. The information on the frequency f at various transmission timings of the transmission wave T may be stored in advance in at least one of the memory 18 connected to the controller 10 and the signal generator 21, for example. On the other hand, the frequency f at various transmission timings of transmission wave T may be calculated, for example, by at least one of the controller 10 and the signal generator 21. In either case, when the frequency f of transmission wave T at a specific point in time is determined, the signal generator 21 can generate a transmission signal of that frequency f at that time.

When the frequency f of transmission wave T is determined in step S1, the controller 10 determines the direction of the beam formed by the transmission wave T (step S2). In step S2, the controller 10 determines the direction of the beam formed by the transmission waves T transmitted from a plurality of transmitting antennas 25, like the direction α illustrated in FIG. 7 for example. Therefore, the direction of the beam formed by the transmission wave T at each point in time may be preset in the controller 10, for example. On the other hand, in step S2, the signal generator 21 or the phase controller 23, instead of the controller 10, may determine the direction of the beam formed by the transmission wave T of the signal generated by itself. The information on the direction of the beam to be formed by the transmission wave T at various transmission timings of the transmission wave T may be stored in advance in at least one of the memory 18 connected to the controller 10, the signal generator 21 and the phase controller 23. Further, the direction of the beam to be formed by the transmission wave T at various transmission timings of the transmission wave T may be calculated in at least one of the controller 10 and the signal generator 21, for example. In either case, when the direction of the beam formed by the transmission wave T at that point in time is determined, the phase controller 23 can control the phase of the transmission signal of the frequency f at the point in time.

Once the direction of the beam of the transmission wave T is determined in step S2, the phase controller 23 determines the phase to control the transmission wave T (step S3). As described above, when the direction of the beam of the transmission wave T is determined, the path difference D of the transmission wave T transmitted from a plurality of transmitting antennas 25 in that direction is determined. Once the path difference D is determined, the phase controller 23 can determine the phase to be controlled or the control amount of the phase so that the phases of the transmission waves T transmitted from a plurality of transmitting antennas 25 are aligned in that direction. Therefore, the control amount of the phase corresponding to the direction of the beam of the transmission wave T may be preset in the phase controller 23, for example. On the other hand, in step S3, the control amount of the phase may be determined by the controller 10 instead of the phase controller 23. The direction of the beam of transmission wave T and the control amount of the phase corresponding to the direction may be stored in advance in at least one of the phase controller 23 and the memory 18 connected to the controller 10. Further, the direction of the beam of the transmission wave T and the control amount of the phase corresponding to the direction may be calculated by, for example, at least one of the phase controller 23 and the controller 10.

When the phase to be controlled is determined in step S3, the phase controller 23 adjusts the determined phase according to the frequency f (step S4). As described above, when the frequency f of transmission wave T changes over time, the phases of the transmission waves T transmitted from a plurality of transmitting antennas 25 may not be aligned in a predetermined direction even if the phase control illustrated in step S3 is performed. Therefore, the phase controller 23 further adjusts the phase of the transmission wave T determined in step S3 according to the frequency f of transmission wave T at the point in time in step S4. The adjustment of the phase performed in step S4 is as described above, thus the detailed explanation thereof will be omitted.

When the phase is adjusted according to the frequency f in step S4, the electronic device 1 transmits the phase-adjusted transmission waves T from a plurality of transmitting antennas 25 (step S5). In step S5, for example, the controller 10 controls at least one of the signal generator 21, the synthesizer 22, the phase controller 23, and the amplifier 24 so that transmission waves T are transmitted from a plurality of transmitting antennas 25. After the process of step S5 is performed, the transmission waves T transmitted from a plurality of transmitting antennas 25 of the electronic device 1 strengthen each other in a predetermined direction to form a beam.

In this manner, the electronic device 1 according to an embodiment transmits transmission waves T from a plurality of transmitting antennas 25. Here, the transmission wave T may be a radio wave whose frequency changes over time. Further, in the electronic device 1 according to an embodiment, the phase controller 23 controls the phase of at least one of the transmission waves T transmitted from a plurality of transmitting antennas 25 so that phases of respective transmission waves T transmitted from a plurality of transmitting antennas 25 are aligned in a predetermined direction α. Moreover, in the electronic device 1 according to an embodiment, the phase controller 23 adjusts the phase of at least one of transmission waves T on the basis of the frequency of the transmission wave.

In an embodiment, the phase controller 23 may adjust a phase of at least one of transmission waves T almost in synchronization with the change of the frequency f over time. Further, in an embodiment, the phase controller 23 may adjust a phase of the transmission wave T so as to cancel the amount of change in the transmission angle of the transmission wave T over time.

The processes of step S3 and step S4 may be performed individually in succession. That is, first, in step S3, a phase may be controlled on the basis of the phase control amount determined. In this case, the phase determined and controlled in step S3 may be further adjusted in step S4. On the other hand, the processes of step S3 and step S4 may be collectively performed. That is, in step S3, the phase control amount is determined, but the phase control based on the determined phase control amount may not be performed. In this case, the phase determined in step S3 and further adjusted in step S4 may be used as a phase of transmission wave T.

As described above, according to the electronic device 1 of an embodiment, when a beam of transmission waves T transmitted from a plurality of transmitting antennas 25 is formed in a predetermined direction, a phase is adjusted on the basis of the frequency f of transmission wave T.

Therefore, according to the electronic device 1 of an embodiment, when a beam of transmission waves T transmitted from a plurality of transmitting antennas 25 is formed, the beam can be precisely directed in a predetermined direction. Thus, according to the electronic device 1 of an embodiment, the accuracy of measuring an object, such as measuring the distance to the object can be improved.

Conventionally, in the technical field such as wireless communication, for example, a beamforming technique is used to direct a beam of transmission waves to a predetermined direction. The frequency of transmission wave used for wireless communication is often a bandwidth on the order of several MHz to several hundred MHz at most. When transmission wave having such a frequency bandwidth is transmitted as, for example, a chirp signal, the width at which the frequency changes over time is negligible compared to the case of millimeter-wave having a bandwidth of 4 GHz. Therefore, in order to align the phases of a plurality of transmission waves having small bandwidths in a predetermined direction, as with radio waves in wireless communication, it is sufficient to control the phases in consideration of the path difference of the transmission waves. That is, in the case of wireless communication, beamforming can be performed in a somewhat accurate direction without adjusting the phase of transmission wave according to the frequency of transmission wave, as described above.

On the other hand, as with a millimeter-wave radar, when a transmission wave with a frequency bandwidth of 4 GHz (77 GHz - 81 GHz), for example, is transmitted, the width at which the frequency changes over time is much larger than that in the case of wireless communication. Therefore, in order to align the phases of a plurality of transmission waves with large bandwidths, such as a radio wave of millimeter-wave radar, in a predetermined direction, it is insufficient to only control the phase in consideration of the path difference of transmission waves. That is, in the case of millimeter-wave radar, beamforming can be performed in a precise direction by adjusting the phase of transmission wave according to the frequency of transmission wave. The present disclosure may be applied when transmitting a transmission wave with a frequency bandwidth lower than 77 GHz or higher than 81 GHz.

As described above, according to the electronic device 1 of an embodiment, when the radar technology is used, beamforming can be performed in a precise direction by transmission waves T transmitted from a plurality of transmitting antennas 25. That is, transmission signals in a specific direction (e.g., a required direction) can be strengthened each other by transmission waves transmitted from a plurality of transmitting antennas 25. Therefore, according to the electronic device 1 of an embodiment, it is possible to improve the accuracy in measuring (or estimating) at least one of the distance to the object 200, the azimuth to the object 200, and the relative velocity to the object 200. Further, according to the electronic device 1 of an embodiment, it is possible to avoid transmitting transmission waves T from a plurality of transmitting antennas 25 in unnecessary directions. Thus, according to the electronic device 1 of an embodiment, reflection waves R received from unnecessary directions can also be reduced. Therefore, according to the electronic device 1 of an embodiment, the accuracy in measuring (or estimating) at least one of the distance to the object 200, the azimuth to the object 200, and the relative velocity to the object 200 can also be improved from this perspective. That is, according to the electronic device 1 of an embodiment, highly precise and reliable measurement can be performed in a desired measurement range.

Next, calibration by the electronic device according to an embodiment will be described.

In the above described electronic device 1, even if the signal generator 21 generates a plurality of transmission signals with the same phase, the phases of transmission signals may not be the same at the time of transmission from each of transmitting antennas 25. This is assumed partly due to the fact that function parts such as the amplifier 24 and/or the filter part are susceptible to temperature fluctuations. That is, in the electronic device 1, the transmission signal generated in the signal generator 21 passes through the phase controller 23, thus the phase thereof at the time of transmission from the transmitting antenna 25 may fluctuate. It is assumed that such phase fluctuations differ depending on the temperature in the function part such as the amplifier 24 and/or the filter. Further, it is also assumed that the above-mentioned phase fluctuation may differ depending on the temperature fluctuation in the function part such as the amplifier 24 and/or the filter.

Further, in the above described electronic device 1, even if phases of a plurality of transmission signals transmitted from each of a plurality of transmitting antennas 25 are the same, the phases of transmission signals may not be the same at the time when the reflection waves of the transmission signals are received by the receiving antennas 31. This may be caused by a change in the permittivity in the path through which the electromagnetic waves propagate from transmission of transmission waves from each of a plurality of transmitting antennas 25 to reception of reflected transmission waves from the receiving antennas 31. The change in the permittivity in the path through which the electromagnetic wave propagates may be caused by, for example, adhesion of water droplets, dust, or the like to at least one of the transmitting antenna 25 and the receiving antenna 31. Further, such change in permittivity may be caused by adhesion of water droplets, dust, or the like to a cover member such as a radar cover covering at least one of the transmitting antenna 25 and the receiving antenna 31. Moreover, the above described change in the permittivity may be caused by, for example, passing of water droplets in the path of electromagnetic wave from transmission of transmission wave from the transmitting antenna 25 until reception of the reflected transmission wave as reflection wave. In this manner, in the electronic device 1, the transmission waves transmitted from each of the transmitting antennas 25 pass through paths having permittivities different from each other, which may result in phase fluctuation at the time when received by the receiving antennas 31.

Therefore, when the above described phase fluctuation occurs, it is desirable to perform calibration by the electronic device 1.

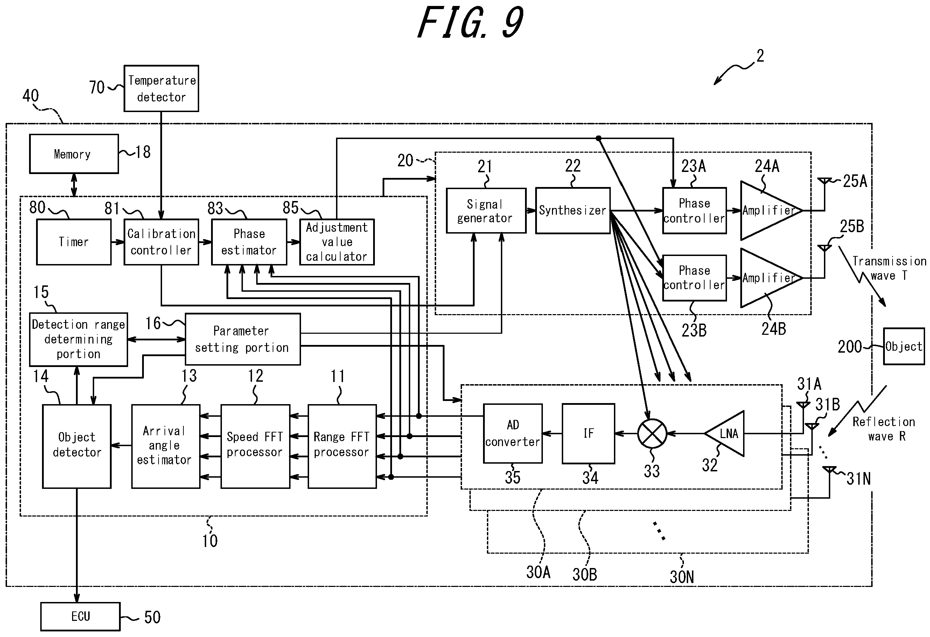

FIG. 9 is a functional block diagram schematically illustrating a configuration of the electronic device configured to perform calibration according to an embodiment. The electronic device illustrated in FIG. 9 may have partially the same configuration as the electronic device 1 according to an embodiment described above. Therefore, the description similar to that of the electronic device 1 according to the above-mentioned embodiment will be simplified or omitted as appropriate below.

As illustrated in FIG. 9, the electronic device 2 according to an embodiment is different from the electronic device 1 described above in the configuration of the controller 10. Further, the electronic device 2 according to an embodiment is connected to a temperature detector 70, which is different from the electronic device 1 described above.

In the electronic device 2 illustrated in FIG. 9, the controller 10 includes a timer 80, a calibration controller 81, a phase estimator 83 and an adjustment value calculator 85. These function parts included in the controller 10 may be configured as a CPU or a program executed by the CPU. Further, as illustrated in FIG. 9, the controller 10 may be connected to the memory 18.

In the controller 10 illustrated in FIG. 9, the calibration controller 81 controls calibration operation performed by the controller 10. The calibration controller 81 may start calibration operation on the basis of the temperature information from the temperature detector 70 and/or the time information from the timer 80. When starting the calibration operation, the calibration controller 81 may control to start at least one of the signal generator 21 and the phase estimator 83.

The phase estimator 83 estimates the phase on the basis of the activation trigger from the calibration controller 81. The phase estimator 83 estimates or calculates, on the basis of a reception signal converted into a digital signal by the AD converter 35, the phase of the reception signal. Thus estimated phase is supplied to the adjustment value calculator 85.

The adjustment value calculator 85 calculates the adjustment value of the phase on the basis of the phase supplied to the adjustment value calculator 85. Calculation of adjustment value of the phase performed by the adjustment value calculator 85 will be further described later. Thus calculated phase adjustment value is supplied to the phase controller 23.

The temperature detector 70 can detect the temperature of a predetermined part of the electronic device 1 or the moving body 100 on which the electronic device 1 is mounted, for example. The temperature detector 70 may be any temperature sensor, such as a sensor that employs a thermistor element, a resistance temperature detector, a thermocouple, or the like, as long as it can detect the temperature. The information on the temperature detected by the temperature detector 70 may be supplied to the controller 10. In an embodiment, the information on the temperature detected by the temperature detector 70 may be supplied to the calibration controller 81.

The temperature detector 70 may detect the temperature at various parts. In particular, the temperature detector 70 may detect the temperature of a component or the like whose temperature is likely to affect the phase fluctuation, or the temperature in the vicinity of the component. For example, the temperature detector 70 may detect the temperature in the vicinity of the amplifier 24 and/or the LNA 32. Further, for example, the temperature detector 70 may detect the temperature of or in the vicinity of the filter. For example, the temperature detector 70 may detect the temperature of inside or in the vicinity of the electronic device 1.

The timer 80 may detect that a predetermined time has come. In addition, the timer 80 may detect that a predetermined time has elapsed. The timer 80 may notify the calibration controller 81 that a predetermined time has come or that a predetermined time has elapsed. In this manner, the information on the time detected by the timer 80 may be supplied to the calibration controller 81. In FIG. 9. the timer 80 is illustrated as a function part constituting the controller 10. However, the timer 80 may be provided outside the controller 10, for example, and notify the controller 10 of the time information. The timer 80 may have any configuration as long as it can detect the arrival of a predetermined time and/or the passage of a predetermined time.

In the example illustrated in FIG. 9, the electronic device 2 includes both the temperature detector 70 and the timer 80. However, as described below, the electronic device 2 may include one of the temperature detector 70 and the timer 80.

FIG. 10 is a flowchart illustrating the operation of calibration performed by the electronic device 2. The operation of the electronic device 2 according to an embodiment is the same as that of the electronic device 1 described above in that each of the reflection waves R of the transmission waves T transmitted from a plurality of transmitting antennas 25 is received by the receiving antenna 31. The electronic device 2 according to an embodiment adjusts a phase of at least one of the transmission waves T so that the phases of respective reflection waves R received by the receiving antenna 31 are aligned on the basis of the result of the operation described above. Such an operation will be simply referred to as "calibration" as appropriate below.

When the operation (calibration) illustrated in FIG. 10 is started, the controller 10 determines whether or not a predetermined temperature or temperature fluctuation is detected by the temperature detector 70 (step S11). For example, when a temperature change of 5° or the like is detected from the starting of temperature detection, it may be determined that a predetermined temperature change is detected. Here, the temperature change that is determined that a predetermined temperature fluctuation is detected may be any temperature change such as 1° or 10°. Further, whether or not the detected temperature has reached a predetermined temperature may be determined in step S11. For example, whether or not the detected temperature has reached a predetermined temperature such as 10° may be determined. Here, the temperature determined to have reached a predetermined temperature may be any temperature such as -5° or 30°. In step S11, instead of or together with detection of a predetermined temperature or its fluctuation, whether or not a predetermined time has elapsed may be detected by the timer 80. For example, it may be determined that 30 seconds have passed as a predetermined time. Here, the time determined as a passage of a predetermined time may be any time such as 1 hour or 6 months.

If a predetermined temperature or its fluctuation or time is not detected in step S11, the controller 10 continues the operation of step S11. That is, the calibration illustrated in FIG. 10 is started when the condition of step S11 is satisfied as a trigger.

On the other hand, when it is determined that a predetermined temperature or its fluctuation or time is detected in step S11, the controller 10 starts calibration. Specifically, the calibration controller 81 starts calibration on the basis of the information from the temperature detector 70 and/or the timer 80. Here, when the calibration is started, the calibration controller 81 activates the phase estimator 83 and the signal generator 21.

When it is determined that a predetermined temperature or its fluctuation or time is detected in step S11, the electronic device 1 transmits a transmission wave T from a first transmitting antenna (transmitting antenna 25A) of a plurality of transmitting antennas 25 (step S12). When the transmission wave T is transmitted in step S12, the electronic device 1 receives a reflection wave R of the transmission wave T from the receiving antenna 31 (step S13). Further, in step S13, the controller 10 estimates (calculates) a first phase from the received reflection wave R. Specifically, in step S13, the AD converter 35 converts the reception signal based on the reflection wave R received from the receiving antenna 31 into a digital signal. Then, the phase estimator 83 estimates (calculates) a first phase on the basis of the digital signal supplied from the AD converter 35. The phase estimator 83 supplies the calculated first phase to the adjustment value calculator 85.

When step S13 is performed, the electronic device 1 transmits a transmission wave T from a second transmitting antenna (transmitting antenna 25B) of a plurality of transmitting antennas 25 (step S14). When a transmission wave T is transmitted in step S14, the electronic device 1 receives a reflection wave R of the transmission wave T from the receiving antenna 31 (step S15). Further, in step S15, the controller 10 estimates or calculates a second phase from the received reflection wave R. Specifically, in step S15, the AD converter 35 converts a reception signal based on the reflection wave R received from the receiving antenna 31 into a digital signal. Then, the phase estimator 83 estimates or calculates a second phase on the basis of the digital signal supplied from the AD converter 35. The phase estimator 83 supplies the calculated second phase to the adjustment value calculator 85.

When the first phase is estimated in step S13 and the second phase is estimated in step S15, the controller 10 calculates a phase adjustment value on the basis of these phases. Specifically, the adjustment value calculator 85 calculates the phase adjustment value from the first phase and the second phase supplied from the phase estimator 83. For example, the adjustment value calculator 85 may calculate a difference between the first phase and the second phase. The controller 10 can compensate for the difference between the first phase and the second phase on the basis of the phase difference, which is a difference between the first phase and the second phase. That is, the controller 10 can align phases of respective reflection waves R received by the receiving antenna 31 by adjusting a phase of at least one of transmission waves T transmitted from a plurality of transmitting antennas 25, on the basis of the phase difference described above.

In order to perform the above described operation, when the phase adjustment value is calculated in step S16, the controller 10 notifies the phase controller 23 of the phase adjustment value (step S17). Specifically, in step S17, the adjustment value calculator 85 notifies the phase controller 23 of the calculated phase adjustment value, which allows the phase controller 23 to adjust a phase of at least one of transmission waves T transmitted from a plurality of transmitting antennas 25, after the calibration. Then, after the calibration, the phases of respective reflection waves R received by the receiving antennas 31 are aligned.

In this manner, as with the above described electronic device 1, the electronic device 2 according to an embodiment transmits, as transmission waves T, radio waves whose frequency changes over time from a plurality of transmitting antennas 25. Here, a plurality of transmitting antennas 25 may be the transmitting antenna 25A and the transmitting antenna 25B. Further, in the electronic device 2 according to an embodiment, as with the above described electronic device 1, the phase controller 23 controls a phase of at least one of transmission waves T transmitted from a plurality of transmitting antennas 25.

On the other hand, in the electronic device 2 according to an embodiment, when a phase of at least one of transmission waves T is adjusted, the phase controller 23 may align phases of respective reflection waves R received by the receiving antenna 31. Further, the phase controller 23 may align the phases of respective reflection waves R received by the receiving antennas 31 on the basis of the result of receiving reflection waves R of the transmission waves T transmitted from a plurality of transmitting antennas 25. Further, the phase controller 23 may adjust a phase of at least one of transmission waves T so as not to cause a phase difference between the reflection waves R on the basis of phases of respective reflection waves R estimated on the basis of the result of receiving each of the reflection waves R from the receiving antenna 31.

Further, in the electronic device 2 according to an embodiment, the phase controller 23 may perform calibration on the basis of detection of a predetermined temperature. Further, in the electronic device 2 according to an embodiment, the phase controller 23 may perform calibration on the basis of detection of a predetermined temperature change. Moreover, in the electronic device 2 according to an embodiment, the phase controller 23 may perform calibration on the basis of passage of a predetermined time. Further, in the electronic device 2 according to an embodiment, the phase controller 23 may perform calibration on the basis of activation or starting of the electronic device 2.

As described above, according to the electronic device 2 of an embodiment, calibration is performed even if the function part affected by the temperature causes a phase fluctuation due to temperature fluctuation. Further, according to the electronic device 2 of an embodiment, calibration is performed even if the phase fluctuation is caused by a change in the permittivity in the path of the electromagnetic wave due to passage of time. In this manner, according to the electronic device 2 of an embodiment, the phases of reflective reflection waves R received by the receiving antenna 31 are aligned by calibration.

In the above described embodiment, in step S11 in FIG. 10, calibration is performed with a predetermined temperature or a fluctuation of the temperature or a predetermined elapse as a trigger. However, in step S11, calibration may be triggered by any one of the followings: reaching a predetermined temperature; a predetermined temperature fluctuation; and elapse of a predetermined time. Further, in another embodiment, calibration may be performed on the basis of activation or starting of the electronic device 1 in step S11.

Although the present disclosure has been described on the basis of the drawings and the examples, it is to be noted that various changes and modifications may be made easily by those who are ordinarily skilled in the art on the basis of the present disclosure. For example, functions and the like included in each function part can be rearranged without logical inconsistency. A plurality of function parts can be combined into one or divided. Each embodiment according to the above described disclosure is not limited to being faithfully implemented in accordance with the above described each embodiment, and may be implemented by appropriately combining each feature or omitting a part thereof. That is, those who are ordinarily skilled in the art can make various changes and modifications to the contents of the present disclosure on the basis of the present disclosure. For example, in each embodiment, each function, each component, each step and the like may be added to another embodiment without logical inconsistency, or replaced with each function, each component, each step and the like of another embodiment. Further, in each embodiment, a plurality of functions, components or steps can be combined into one or divided. Moreover, each embodiment according to the above described disclosure is not limited to being faithfully implemented in accordance with the above described each embodiment, and may be implemented by appropriately combining each feature or omitting a part thereof.

The above described embodiment is not limited to the implementation as the electronic device 1 and the electronic device 2. For example, the above described embodiment may be implemented as a control method of a device such as the electronic device 1 and the electronic device 2. Moreover, the above described embodiment may be implemented as a control program of a device such as the electronic device 1 and the electronic device 2.

In the above described embodiment, the number of the transmitting antennas 25 is assumed to be two. However, in an embodiment, the number of the transmitting antennas 25 may be three or more. When three or more transmitting antennas 25 are used, one of the transmitting antennas 25 may be a reference antenna. In this case, the phase of the transmission wave transmitted by the transmitting antenna 25 may be controlled according to the path difference D in a predetermined direction between the transmission wave transmitted by the reference antenna and the transmission wave transmitted by the other transmitting antenna 25. Further, when the phase is controlled in the above described manner, the phase may be adjusted on the basis of the frequency f of transmission wave.

The electronic device 1 and the electronic device 2 according to an embodiment may include, for example, only the phase controller 23 as a minimum configuration. On the other hand, the electronic device 1 and electronic device 2 according to an embodiment may include, as appropriate, in addition to the phase controller 23, at least one of the controller 10, the signal generator 21, and the transmitting antenna 25 illustrated in FIG. 2. Further, the electronic device 1 and the electronic device 2 according to an embodiment may be configured by including, as appropriate, in addition to the phase controller 23, instead of or together with the above described function part, at least one of the receiving antenna 31, the AD converter 35, the range FFT processor 11, the speed FFT processor 12 and the arrival angle estimator 13. In this manner, the electronic device 1 and the electronic device 2 according to an embodiment may be configured in various manners. Further, when the electronic device 1 and the electronic device 2 according to an embodiment are mounted on the moving body 100, for example, at least one of the above described function parts may be provided in an appropriate place such as inside the moving body 100. On the other hand, in an embodiment, for example, at least one of the transmitting antenna 25 and the receiving antennas 31 may be mounted outside the moving body 100.

Further, in the present disclosure, the controller 10 may set parameter values of the parameter setting portion 16 according to the position of the moving body 100. For example, the controller 10 may use the parameter value of the parameter setting portion 16 as a setting value for sensing a long-distance narrow-angle range when the moving body 100 is traveling at a high speed, and as a setting value for sensing the left and right of the intersection in a short-distance wide angle when the moving body 100 is entering the intersection. The multifunction radar in this case can respond seamlessly and precisely to the situation of the moving body 100.

REFERENCE SIGNS LIST

| 1, 2 | Electronic device |
|---|---|
| 10 | Controller |
| 11 | Distance FFT processor |
| 12 | Speed FFT processor |
| 13 | Arrival angle estimator |
| 14 | Object detector |
| 15 | Detection range determining portion |
| 16 | Parameter setting portion |
| 18 | Memory |
| 20 | Transmitter |
| 21 | Signal generator |
| 22 | Synthesizer |
| 23 | Phase controller |
| 24 | Amplifier |
| 25, 25A, 25B | Transmitting antenna |
| 30 | Receiver |
| 31, 31A, 31B, 31N | Receiving antennas |
| 32 | LNA |
| 33 | Mixer |
| 34 | IF |
| 35 | AD converter |
| 40 | Sensor |
| 50 | ECU |
| 70 | Temperature detector |
| 80 | Timer |
| 81 | Calibration controller |
| 83 | Phase estimator |
| 85 | Adjustment value calculator |
| 100 | Moving body |
| 200 | Object |

**Claims**

1. An electronic device (1) configured to transmit, as transmission waves, radio waves whose frequency changes over time from a plurality of transmitting antennas (25), comprising:

   a phase controller (23) configured to control a phase of at least one of the transmission waves transmitted from the transmitting antennas (25) so that phases of respective transmission waves transmitted from the transmitting antennas (25) are aligned in a predetermined direction, wherein
   the phase controller (23) is configured to adjust the phase of at least one of the transmission waves on the basis of frequency of the transmission wave,
   wherein a phase adjustment amount $S(t,\theta)$) is expressed as

   $$S(t,\theta) = \{W\sin\theta\}/c \times f(t) \times 360°,$$

   and
   wherein an output signal of the phase controller (23) for the at least one of the transmission waves is expressed as

$$\exp(j \cdot 2\pi f(t) \cdot t + \delta(\theta) + S(t,\theta)),$$

with W being a distance between the transmitting antennas (25), $\theta$ being a transmission angle in a direction perpendicular to a direction in which the transmitting antennas (25) are arranged, c being the speed of light, f(t) being a time-dependent frequency, j being an imaginary unit, and $\delta(\theta)$ being a phase to be controlled according to a path difference.

2. The electronic device (1) according to claim 1, wherein the phase controller (23) is configured to adjust the phase of at least one of the transmission waves almost in synchronization with a change of the frequency over time.

3. The electronic device (1) according to claim 1 or 2, wherein the phase controller (23) is configured to adjust the phase of at least one of the transmission waves so that a phase difference with respect to a reference transmission wave will be a constant value.

4. The electronic device (1) according to any one of claims 1 to 3, wherein the phase controller (23) is configured to control the phase of at least one of the transmission waves, according to a path difference of each of the transmission waves transmitted from the transmitting antennas (25) in the predetermined direction.

5. The electronic device (1) according to any one of claims 1 to 4, comprising:

   a memory (18) configured to store a phase adjustment amount corresponding to the frequency of the transmission wave, wherein
   the phase controller (23) is configured to control the phase of at least one of the transmission waves on the basis of a phase adjustment amount corresponding to the frequency of the transmission wave stored in the memory (18).

6. The electronic device (1) according to any one of claims 1 to 4, wherein the phase controller (23) is configured to adjust the phase of at least one of the transmission waves on the basis of the phase adjustment amount calculated from the frequency of the transmission wave.

7. The electronic device (1) according to claim 6, wherein the phase controller (23) is configured to adjust the phase of at least one of the transmission waves on the basis of the phase adjustment amount obtained from filter processing of the frequency of the transmission wave.

8. The electronic device (1) according to any one of claims 1 to 7, comprising a controller configured to estimate, on the basis of a reflection wave of a transmission wave transmitted from the transmitting antennas (25) and reflected by a predetermined object, at least any one of a distance to the predetermined object, an azimuth with respect to the predetermined object and a relative velocity with respect to the predetermined object.

9. The electronic device (1) according to any one of claims 1 to 8 configured to transmit a transmission wave whose frequency changes linearly over time.

10. The electronic device (1) according to any one of claims 1 to 9 configured to transmit a transmission wave whose frequency changes periodically over time.

11. The electronic device (1) according to any one of claims 1 to 10 configured to transmit a millimeter-wave band radio wave as the transmission wave.

12. The electronic device (1) according to claim 11 configured to transmit, as the transmission wave, a radio wave with a frequency bandwidth of 77 GHz or higher and 81 GHz or lower.

13. A control method of an electronic device (1), comprising:

   a transmission step of transmitting, as a transmission wave, a radio waves whose frequency changes over time from a plurality of transmitting antennas (25);
   a phase control step of controlling a phase of at least one of transmission waves transmitted from the transmitting antennas (25) so that phases of respective transmission waves transmitted from the transmitting antennas (25)

are aligned in a predetermined direction; and
a phase adjustment step of adjusting the phase of at least one of transmission waves on the basis of a frequency of the transmission wave,
wherein a phase adjustment amount $S(t,\theta)$) is expressed as

$$S(t,\theta)=\{W\sin \theta \}/c\times f(t)\times 360°,$$

and
wherein an output signal of the phase controller (23) for the at least one of the transmission waves is expressed as

$$\exp(j\cdot 2\pi f(t)\cdot t+\delta(\theta)+S(t,\theta)),$$

with W being a distance between the transmitting antennas (25), $\theta$ being a transmission angle in a direction perpendicular to a direction in which the transmitting antennas (25) are arranged, c being the speed of light, f(t) being a time-dependent frequency, j being an imaginary unit, and $\delta(\theta)$ being a phase to be controlled according to a path difference.

14. A control program of an electronic device (1) configured to cause a computer to execute:

a transmission step of transmitting, as a transmission wave, a radio waves whose frequency changes over time from a plurality of transmitting antennas (25);
a phase control step of controlling a phase of at least one of transmission waves transmitted from the transmitting antennas (25) so that phases of respective transmission waves transmitted from the transmitting antennas (25) are aligned in a predetermined direction; and
a phase adjustment step of adjusting the phase of at least one of transmission waves on the basis of a frequency of the transmission wave,
wherein a phase adjustment amount $S(t,\theta)$) is expressed as

$$S(t,\theta)=\{W\sin \theta \}/c\times f(t)\times 360°,$$

and
wherein an output signal of the phase controller (23) for the at least one of the transmission waves is expressed as

$$\exp(j\cdot 2\pi f(t)\cdot t+\delta(\theta)+S(t,\theta)),$$

with W being a distance between the transmitting antennas (25), $\theta$ being a transmission angle in a direction perpendicular to a direction in which the transmitting antennas (25) are arranged, c being the speed of light, f(t) being a time-dependent frequency, j being an imaginary unit, and $\delta(\theta)$ being a phase to be controlled according to a path difference.

**Patentansprüche**

1. Elektronische Vorrichtung (1), die konfiguriert ist, Funkwellen, deren Frequenz sich im Zeitverlauf verändert, als Übertragungswellen von einer Vielzahl von übertragenden Antennen (25) zu übertragen, umfassend:

eine Phasensteuerung (23), die konfiguriert ist, eine Phase mindestens einer der Übertragungswellen, die von den übertragenden Antennen (25) übertragen werden, so zu steuern, dass Phasen jeweiliger Übertragungswellen, die von den übertragenden Antennen (25) übertragen werden, in einer vorab festgelegten Richtung angeglichen sind,
wobei
die Phasensteuerung (23) konfiguriert ist, die Phase mindestens einer der Übertragungswellen auf der Grundlage der Frequenz der Übertragungswelle anzupassen,
wobei ein Betrag der Phasenanpassung $S(t,\theta)$ ausgedrückt wird als

$$S(t,\theta)=\{W\sin\ \theta\}/c\times f(t)\times 360°,$$

und
wobei ein Ausgangssignal der Phasensteuerung (23) für die mindestens eine der Übertragungswellen ausgedrückt wird als

$$\exp(j\cdot 2\pi f(t)\cdot t+\delta(\theta)+S(t,\theta)),$$

wobei W ein Abstand zwischen den übertragenden Antennen (25) ist, θ ein Übertragungswinkel in einer Richtung rechtwinklig zu einer Richtung ist, in welcher die übertragenden Antennen (25) angeordnet sind, c die Lichtgeschwindigkeit ist, f(t) eine zeitabhängige Frequenz ist, j eine imaginäre Einheit ist und δ(θ) eine Phase ist, die gemäß einer Pfaddifferenz zu steuern ist.

2.  Elektronische Vorrichtung (1) nach Anspruch 1, wobei die Phasensteuerung (23) konfiguriert ist, die Phase mindestens einer der Übertragungswellen nahezu in Synchronisation mit einer Veränderung der Frequenz im Zeitverlauf anzupassen.

3.  Elektronische Vorrichtung (1) nach Anspruch 1 oder 2, wobei die Phasensteuerung (23) konfiguriert ist, die Phase mindestens einer der Übertragungswellen so zu steuern, dass eine Phasendifferenz in Bezug auf eine Referenzübertragungswelle einen konstanten Wert haben wird.

4.  Elektronische Vorrichtung (1) nach einem der Ansprüche 1 bis 3, wobei die Phasensteuerung (23) konfiguriert ist, die Phase mindestens einer der Übertragungswellen gemäß einer Pfaddifferenz jeder der Übertragungswellen, die von den übertragenden Antennen (25) übertragen werden, in der vorab festgelegten Richtung zu steuern.

5.  Elektronische Vorrichtung (1) nach einem der Ansprüche 1 bis 4, umfassend:

    einen Speicher (18), der konfiguriert ist, einen Betrag der Phasenanpassung entsprechend der Frequenz der Übertragungswelle zu speichern, wobei
    die Phasensteuerung (23) konfiguriert ist, die Phase mindestens einer der Übertragungswellen auf der Grundlage eines in dem Speicher (18) gespeicherten Betrages der Phasenanpassung entsprechend der Frequenz der Übertragungswelle zu steuern.

6.  Elektronische Vorrichtung (1) nach einem der Ansprüche 1 bis 4, wobei die Phasensteuerung (23) konfiguriert ist, die Phase mindestens einer der Übertragungswellen auf der Grundlage des aus der Frequenz der Übertragungswelle berechneten Betrages der Phasenanpassung zu steuern.

7.  Elektronische Vorrichtung (1) nach Anspruch 6, wobei die Phasensteuerung (23) konfiguriert ist, die Phase mindestens einer der Übertragungswellen auf der Grundlage des aus einer Filterverarbeitung der Frequenz der Übertragungswelle berechneten Betrages der Phasenanpassung zu steuern.

8.  Elektronische Vorrichtung (1) nach einem der Ansprüche 1 bis 7, eine Steuerung umfassend, die konfiguriert ist, auf der Grundlage einer Reflexionswelle einer Übertragungswelle, die von den übertragenden Antennen (25) übertragen wird und von einem vorab festgelegten Objekt reflektiert wird, mindestens eines von einem Abstand zu dem vorab festgelegten Objekt, einem Azimut in Bezug auf das vorab festgelegte Objekt und einer relativen Geschwindigkeit in Bezug auf das vorab festgelegte Objekt zu schätzen.

9.  Elektronische Vorrichtung (1) nach einem der Ansprüche 1 bis 8, die konfiguriert ist, eine Übertragungswelle zu übertragen, deren Frequenz sich linear im Zeitverlauf verändert.

10. Elektronische Vorrichtung (1) nach einem der Ansprüche 1 bis 9, die konfiguriert ist, eine Übertragungswelle zu übertragen, deren Frequenz sich periodisch im Zeitverlauf verändert.

11. Elektronische Vorrichtung (1) nach einem der Ansprüche 1 bis 10, die konfiguriert ist, eine Funkwelle im Millimeterwellenband als die Übertragungswelle zu übertragen.

**12.** Elektronische Vorrichtung (1) nach Anspruch 11, die konfiguriert ist, eine Funkwelle mit einer Frequenzbandbreite von 77 GHz oder höher und 81 GHz oder niedriger als die Übertragungswelle zu übertragen.

**13.** Steuerverfahren einer elektronischen Vorrichtung (1), umfassend:

einen Übertragungsschritt des Übertragens von Funkwellen, deren Frequenz sich im Zeitverlauf verändert, als Übertragungswellen von einer Vielzahl von übertragenden Antennen (25);
einen Phasensteuerungsschritt des Steuerns einer Phase mindestens einer der Übertragungswellen, die von den übertragenden Antennen (25) übertragen werden, so, dass Phasen jeweiliger Übertragungswellen, die von den übertragenden Antennen (25) übertragen werden, in einer vorab festgelegten Richtung angeglichen sind; und
einen Phasenanpassungsschritt des Anpassens der Phase mindestens einer der Übertragungswellen auf der Grundlage einer Frequenz der Übertragungswelle,
wobei ein Betrag der Phasenanpassung S(t,θ) ausgedrückt wird als

$$\mathrm{S(t,\theta)=\{Wsin\ \theta\}/c\times f(t)\times 360°,}$$

und
wobei ein Ausgangssignal der Phasensteuerung (23) für die mindestens eine der Übertragungswellen ausgedrückt wird als

$$\mathrm{exp(j\cdot 2\pi f(t)\cdot t+\delta(\theta)+S(t,\theta)),}$$

wobei W ein Abstand zwischen den übertragenden Antennen (25) ist, θ ein Übertragungswinkel in einer Richtung rechtwinklig zu einer Richtung ist, in welcher die übertragenden Antennen (25) angeordnet sind, c die Lichtgeschwindigkeit ist, f(t) eine zeitabhängige Frequenz ist, j eine imaginäre Einheit ist und δ(θ) eine Phase ist, die gemäß einer Pfaddifferenz zu steuern ist.

**14.** Steuerprogramm einer elektronischen Vorrichtung (1), das konfiguriert ist, einen Computer zu veranlassen, Folgendes auszuführen:

einen Übertragungsschritt des Übertragens von Funkwellen, deren Frequenz sich im Zeitverlauf verändert, als Übertragungswellen von einer Vielzahl von übertragenden Antennen (25);
einen Phasensteuerungsschritt des Steuerns einer Phase mindestens einer der Übertragungswellen, die von den übertragenden Antennen (25) übertragen werden, so, dass Phasen jeweiliger Übertragungswellen, die von den übertragenden Antennen (25) übertragen werden, in einer vorab festgelegten Richtung angeglichen sind; und
einen Phasenanpassungsschritt des Anpassens der Phase mindestens einer der Übertragungswellen auf der Grundlage einer Frequenz der Übertragungswelle,
wobei ein Betrag der Phasenanpassung S(t,θ) ausgedrückt wird als

$$\mathrm{S(t,\theta)=\{Wsin\ \theta\}/c\times f(t)\times 360°,}$$

und
wobei ein Ausgangssignal der Phasensteuerung (23) für die mindestens eine der Übertragungswellen ausgedrückt wird als

$$\mathrm{exp(j\cdot 2\pi f(t)\cdot t+\delta(\theta)+S(t,\theta)),}$$

wobei W ein Abstand zwischen den übertragenden Antennen (25) ist, θ ein Übertragungswinkel in einer Richtung rechtwinklig zu einer Richtung ist, in welcher die übertragenden Antennen (25) angeordnet sind, c die Lichtgeschwindigkeit ist, f(t) eine zeitabhängige Frequenz ist, j eine imaginäre Einheit ist und δ(θ) eine Phase ist, die gemäß einer Pfaddifferenz zu steuern ist.

**Revendications**

1. Dispositif électronique (1) configuré pour émettre, en tant qu'ondes d'émission, des ondes radio dont la fréquence change dans le temps à partir d'une pluralité d'antennes émettrices (25), comprenant :

   un contrôleur (23) de phase configuré pour commander une phase d'au moins une des ondes d'émission émises à partir des antennes émettrices (25) de telle sorte que les phases des ondes d'émission respectives émises à partir des antennes émettrices (25) soient alignées dans une direction prédéterminée,
   le contrôleur (23) de phase étant configuré pour ajuster la phase d'au moins une des ondes d'émission sur la base de la fréquence de l'onde d'émission,
   une quantité S(t,θ) d'ajustement de phase étant exprimée comme suit

$$S(t,\theta) = \{W\sin\,\theta\}/c \times f(t) \times 360°,$$

   et
   un signal de sortie du contrôleur (23) de phase pour au moins une des ondes d'émission étant exprimé comme

$$\exp(j \cdot 2\pi f(t) \cdot t + \delta(\theta) + S(t,\theta)),$$

   W étant une distance entre les antennes émettrices (25), θ étant un angle d'émission dans une direction perpendiculaire à une direction dans laquelle sont disposées les antennes émettrices (25), c étant la vitesse de la lumière, f(t) étant une fréquence dépendant du temps, j étant une unité imaginaire, et δ(θ) étant une phase à commander selon une différence de trajet.

2. Dispositif électronique (1) selon la revendication 1, le contrôleur (23) de phase étant configuré pour ajuster la phase d'au moins une des ondes d'émission presque en synchronisation avec un changement de la fréquence dans le temps.

3. Dispositif électronique (1) selon la revendication 1 ou 2, le contrôleur (23) de phase étant configuré pour ajuster la phase d'au moins une des ondes d'émission de telle sorte qu'une différence de phase par rapport à une onde d'émission de référence soit une valeur constante.

4. Dispositif électronique (1) selon l'une quelconque des revendications 1 à 3, le contrôleur (23) de phase étant configuré pour commander la phase d'au moins l'une des ondes d'émission, en fonction d'une différence de chemin de chacune des ondes d'émission émises à partir des antennes émettrices (25) dans la direction prédéterminée.

5. Dispositif de traitement d'informations (1) selon l'une quelconque des revendications 1 à 4, comprenant :

   une mémoire (18) configurée pour stocker une quantité d'ajustement de phase correspondant à la fréquence de l'onde d'émission,
   le contrôleur (23) de phase étant configuré pour commander la phase d'au moins une des ondes d'émission sur la base d'une quantité d'ajustement de phase correspondant à la fréquence de l'onde d'émission stockée dans la mémoire (18).

6. Dispositif électronique (1) selon l'une quelconque des revendications 1 à 4, le contrôleur (23) de phase étant configuré pour ajuster la phase d'au moins une des ondes d'émission sur la base de la quantité d'ajustement de phase calculée à partir de la fréquence de l'onde d'émission.

7. Dispositif électronique (1) selon la revendication 6, le contrôleur (23) de phase étant configuré pour ajuster la phase d'au moins une des ondes d'émission sur la base de la quantité d'ajustement de phase obtenue à partir d'un traitement par filtrage de la fréquence de l'onde d'émission.

8. Dispositif électronique (1) selon l'une quelconque des revendications 1 à 7, comprenant un contrôleur configuré pour estimer, sur la base d'une onde de réflexion d'une onde d'émission émise par les antennes émettrices (25) et réfléchie par un objet prédéterminé, au moins un élément quelconque parmi une distance à l'objet prédéterminé, un azimut par rapport à l'objet prédéterminé et une vitesse relative par rapport à l'objet prédéterminé.

**9.** Dispositif électronique (1) selon l'une quelconque des revendications 1 à 8, configuré pour émettre une onde d'émission dont la fréquence change linéairement dans le temps.

**10.** Dispositif électronique (1) selon l'une quelconque des revendications 1 à 9, configuré pour émettre une onde d'émission dont la fréquence change périodiquement dans le temps.

**11.** Dispositif électronique (1) selon l'une quelconque des revendications 1 à 10, configuré pour émettre une onde radio de bande d'ondes millimétriques en tant qu'onde d'émission.

**12.** Dispositif électronique (1) selon la revendication 11, configuré pour émettre, en tant qu'onde d'émission, une onde radio avec une largeur de bande de fréquence de 77 GHz ou plus et de 81 GHz ou moins.

**13.** Procédé de commande d'un dispositif électronique (1), comprenant :

une étape d'émission consistant à émettre, en tant qu'onde d'émission, des ondes radio dont la fréquence change dans le temps à partir d'une pluralité d'antennes émettrices (25);
une étape de commande de phase consistant à commander une phase d'au moins une des ondes d'émission émises à partir des antennes émettrices (25) de telle sorte que les phases des ondes d'émission respectives émises à partir des antennes émettrices (25) soient alignées dans une direction prédéterminée ; et
une étape d'ajustement de phase consistant à ajuster la phase d'au moins une des ondes d'émission sur la base d'une fréquence de l'onde d'émission,
une quantité $S(t,\theta)$ d'ajustement de phase étant exprimée comme suit

$$S(t,\theta)=\{Wsin\ \theta\}/c\times f(t)\times 360°,$$

et
un signal de sortie du contrôleur (23) de phase pour au moins une des ondes d'émission étant exprimé comme

$$exp(j\cdot 2\pi f(t)\cdot t+\delta(\theta)+S(t,\theta)),$$

W étant une distance entre les antennes émettrices (25), $\theta$ étant un angle d'émission dans une direction perpendiculaire à une direction dans laquelle sont disposées les antennes émettrices (25), c étant la vitesse de la lumière, f(t) étant une fréquence dépendant du temps, j étant une unité imaginaire, et $\delta(\theta)$ étant une phase à commander selon une différence de trajet.

**14.** Programme de commande d'un dispositif électronique (1) configuré pour amener un ordinateur à exécuter :

une étape d'émission consistant à émettre, en tant qu'onde d'émission, des ondes radio dont la fréquence change dans le temps à partir d'une pluralité d'antennes émettrices (25);
une étape de commande de phase consistant à commander une phase d'au moins une des ondes d'émission émises à partir des antennes émettrices (25) de telle sorte que les phases des ondes d'émission respectives émises à partir des antennes émettrices (25) soient alignées dans une direction prédéterminée ; et
une étape d'ajustement de phase consistant à ajuster la phase d'au moins une des ondes d'émission sur la base d'une fréquence de l'onde d'émission,
une quantité $S(t,\theta)$ d'ajustement de phase étant exprimée comme suit

$$S(t,\theta)=\{Wsin\ \theta\}/c\times f(t)\times 360°,$$

et
un signal de sortie du contrôleur (23) de phase pour au moins une des ondes d'émission étant exprimé comme

$$exp(j\cdot 2\pi f(t)\cdot t+\delta(\theta)+S(t,\theta)),$$

W étant une distance entre les antennes émettrices (25), $\theta$ étant un angle d'émission dans une direction perpendiculaire à une direction dans laquelle sont disposées les antennes émettrices (25), c étant la vitesse de la lumière, f(t) étant une fréquence dépendant du temps, j étant une unité imaginaire, et $\delta(\theta)$ étant une phase à commander selon une différence de trajet.

# FIG. 1

# FIG. 2

# FIG. 3

Frequency f

f2

f1

c1    c2

Time t

# FIG. 4

Frequency f

f2

f1

Time t

# FIG. 5

# FIG. 6

# FIG. 7

# *FIG. 8*

```
        ( START )
            |
            v
┌──────────────────────────────────────┐
│ Determine frequency of transmission wave │ ~ S1
└──────────────────────────────────────┘
            |
            v
┌──────────────────────────────────────┐
│ Determine beam direction of transmission wave │ ~ S2
└──────────────────────────────────────┘
            |
            v
┌──────────────────────────────────────┐
│      Determine phase to be controlled      │ ~ S3
└──────────────────────────────────────┘
            |
            v
┌──────────────────────────────────────┐
│      Adjust phase according to frequency    │ ~ S4
└──────────────────────────────────────┘
            |
            v
┌──────────────────────────────────────┐
│          Transmit transmission wave         │ ~ S5
└──────────────────────────────────────┘
            |
            v
         ( END )
```

FIG. 9

# FIG. 10

START

↓

N ⟨ Predetermined temperature fluctuation or predetermined time elapse? ⟩ ~S11

↓ Y

Transmit transmission wave from first transmitting antenna ~S12

↓

Estimate first phase from received reflection wave ~S13

↓

Transmit transmission wave from second transmitting antenna ~S14

↓

Estimate second phase from received reflection wave ~S15

↓

Calculate phase adjustment value from first phase and second phase ~S16

↓

Notify phase controller of phase adjustment value ~S17

↓

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018137184 A
- JP 2018179122 A
- JP 2015005994 A
- JP 2010243237 A
- JP 2017143356 A